# EUROPEAN PATENT SPECIFICATION

(11) **EP 3 539 905 B1**
(45) Date of publication and mention of the grant of the patent: **28.06.2023**
(21) Application number: 19162230.7
(22) Date of filing: 12.03.2019
(51) Int. Cl.: B65G 13/06, B65G 13/071, B65G 21/00, B65G 13/00

(54) **DRIVING DEVICE FOR A ROLLER CONVEYOR**
ANTRIEBSVORRICHTUNG FÜR EINEN ROLLENFÖRDERER
DISPOSITIF D'ENTRAÎNEMENT POUR TRANSPORTEUR À ROULEAUX

(30) Priority: 12.03.2018 EP 18161255
(43) Date of publication of application: 18.09.2019
(73) Proprietor: Interroll Holding AG, 6592 Sant' Antonino (CH)
(72) Inventor: Dudek, Siegmund, 6592 Sant'Antonino (CH); Steffen, Jonas, 6592 Sant'Antonino (CH); Frangeul, Xavier, 6592 Sant'Antonino (CH); Loizeau, Antoine, 6592 Sant'Antonino (CH)
(74) Representative: Kohlhof, Stephan

(56) References cited:
- EP-A1- 3 090 966
- WO-A2-2014/118716
- JP-A- H08 268 538
- US-A1- 2016 167 888

## Description

The invention relates to a driving device for driving a roller conveyor. According to a further aspect, the invention relates to a method for driving a roller conveyor.

Roller conveyors are used in intralogistic applications for transporting goods along a predetermined path. Typically, such roller conveyor may be used to convey any such goods directly, or to convey pallets, boxes or the like containing such goods.

A usual setup of a roller conveyor comprises a plurality of rollers being rotatably mounted in a frame. The axes of rotation of the rollers may be parallel to each other to setup a roller conveyor for a straight conveying direction. For a setup having a curved conveying direction, the axes of rotation of the rollers may be angular to each other and the rollers employed in such a curved path may have a conical shape.

A main advantage of such roller conveyors is the option to control the conveying action of a plurality of goods on said roller conveyor individually for each good to be conveyed and selectively for single rollers or groups of rollers. Usually, a roller conveyor is divided up into a plurality of conveyor zones and each conveyor zone may be driven individually to effect a conveying of goods placed in said zone and to convey said goods into an adjacent downstream zone. For example, a roller conveyor may be controlled to convey a plurality of goods in a block mode, wherein all goods in all conveyor zones are conveyed simultaneously or in a single mode wherein a single good or goods in a single conveyor zone is/are conveyed from one zone to the adjacent downstream zone only if the adjacent down stream zone is empty.

The individual and selective control of the conveying action in a roller conveyor requires a plurality of drive units to allow the individual control. Usually, a single conveyor zone comprises a single motor driven roller and a plurality of idle rollers. The single motor driven roller is employed for effecting the conveying action. To this regard, the motor driven roller itself effects a conveying action via its circumferential surface, namely the outer roller body. Further, the motor driven roller may drive the adjacent idle rollers of the conveyor zone by e.g. a belt transmission arrangement at one end of the rollers.

In other embodiments, a motor is installed at each conveyor zone below a plurality of idle rollers to drive said idle rollers via a chain drive, belt drive, or the like from below. Generally, this type of roller conveyor allows for effective conveying of goods such that multiple goods can be conveyed with high conveyor speed on such roller conveyors. However, the need for individual control and driving action of the multiple conveyor zones employed in such roller conveyor requires a significant number of drive units, control units and programming action to effect said conveying action. Further, whilst it is possible to design and setup such roller conveyors depending on the expected volume of goods to be conveyed therewith, it is generally not possible to adapt such roller conveyors in case of a change of such volume of goods without the need to reconfigure the roller conveyor and to thus interrupt the conveying action for a significant time. As a result, herefrom, roller conveyors are usually designed to fulfil the expected maximum volume of goods to be conveyed. Much often, thus, the roller conveyors are driven over long time periods in a condition where only a small percentage of the capacity is used.

JPH08268538A describes a preserving stand having a conveyor device and a moving carriage having a traveling device and a conveyor device, wherein a carrying object is transferred between the moving carriage and the preserving stand by driving both conveyor devices in a condition where the moving stand stops adjacently to the preserving stand.

WO2014/118716A2 describes a satellite vehicle for automated storage systems, of the type provided with tracks for the vehicle to move along, comprising a frame, a support surface of a load foreseen on top of said frame, first wheels and second wheels.

It is a general desire and the object of the invention to allow a fast change of the setup of a roller conveyor such as to allow efficient conveying of small or large volumes of goods.

This object is solved by a mobile driving device for driving a roller conveyor comprising a chassis frame, a traction device mounted to said chassis frame, wherein said traction device is adapted to move said chassis frame on a supporting surface, a first drive unit mechanically coupled to said traction device to transmit a driving force to said traction device for moving said chassis frame on said supporting surface, a roller driving device mounted to said chassis frame, wherein said roller driving device is adapted to be mechanically coupled to one or a plurality of rollers of said roller conveyor, a second drive unit mechanically coupled to said roller driving device for transmitting a conveying force to said roller driving device, wherein said mobile driving device has first, second, third and fourth axis which are parallel to each other in a straightforward driving condition wherein said mobile driving device moves along a straight line, said first and said second axis are arranged at a front end of said chassis frame and said third and said fourth axis are arranged at a rear end of said chassis frame, and wherein in said straightforward driving condition said first axis is arranged in a first offset distance to said second axis, and said third axis is arranged in a second offset distance to said fourth axis.

According to the invention, a mobile driving device is provided which is adapted for driving a roller conveyor. As a first important aspect of the invention, the driving device employed for driving the rollers of a roller conveyor is mobile, such that the driving device can be moved relatively to the roller conveyor and be positioned at different places at the roller conveyor. By this, the driving action effected by the driving device onto the rollers of the roller conveyor can be provided at different positions and thus can drive different rollers of the roller conveyor.

To effect the mobility of the mobile driving device, it is built up from a chassis frame and a traction device mounted to said chassis frame. The chassis frame may be a platform, framework or the like and the traction device may be any type of mechanical arrangement allowing to move said chassis frame from one place to another. Generally, the traction device may comprise wheels, rollers, a caterpillar or the like, which may at the same time support the chassis frame on supporting surface like e.g. a ground surface, a guiding frame or rails or the like, and can transmit a driving force from said chassis frat a counterface like e.g. onto the supporting surface to propel the mobile driving device over said supporting surface. However, other variations of a traction device may comprise a device interacting with the roller conveyor like e.g. with its frame or framework or any other installations in the vicinity of such a roller conveyor to drive the mobile driving device from one place to the other along the roller conveyor or between two different roller conveyors. It is generally understood that the traction device may have a limited degree of freedom to drive the chassis frame along a part of the roller conveyor only or may have full degree of freedom to drive the chassis frame to any position within a huge roller conveyor arrangement or even to drive the chassis frame from one roller conveyor to another roller conveyor. While basically the chassis frame may be supported on a ground surface, in other variations, the chassis frame may be supported in a framework, in any other type of mechanical construction constituting the supporting surface and thus move over said ground surface in a distance from said ground surface.

The mobile driving device further comprises a first drive unit for driving said traction device. By this, the mobile driving device is self-propelled and thus can move independently from one position to another position by said traction device. The first drive unit may e.g. be an electric motor and may serve for other purposes than only driving said chassis frame via said traction device only. E.g. the electric motor may serve to drive the rollers of the roller conveyor as well.

The mobile driving device according to the invention further comprises a roller driving device. This roller driving device allows a mechanical coupling to a single roller or to a plurality of rollers of a roller conveyor simultaneously and it is understood that depending on the position of the chassis frame, another single roller or a plurality of rollers may be mechanically coupled to said roller driving device. The mechanical coupling is understood to effect a driving force from the roller driving device to said roller(s) of said roller conveyor. Generally, the roller of the roller conveyor may be an idle roller such that the roller conveyor is built up from idle rollers only. A single or a plurality of mobile driving devices according to the invention may be employed for driving the rollers of the roller conveyor.

However, in another type of use the mobile driving device may serve to replace failed motor driven rollers in conventional roller conveyor setups, too. The mobile driving device may also serve to restart a pallet stuck into a gravity roller conveyor.

The mechanical coupling of the roller driving device to one or a plurality of rollers may be effected by frictional force, by a form locking action or a combination thereof. Generally, the mechanical coupling of the roller driving device to the single or plurality of rollers should be releasable to allow coupling of the mobile driving device to different rollers of the roller conveyor depending on the position of the mobile driving device. The roller driving device is driven by a second drive unit serving to effect the driving and thus the conveying of the goods by the rollers. Said second drive unit may be partially integral with the first drive unit, e.g. by sharing the same motor, or may be a completely independent drive unit. Again, the second drive unit may comprise an electric motor as one example.

According to the invention, the mobile driving device has a straightforward driving condition, wherein the mobile driving device is moved along a straight line. In this straightforward driving condition, the four axes of the wheels comprised in the traction device are parallel to each other. Generally, the mobile driving device may be adapted for such straightforward movement only. However, the mobile driving device may be configured to change the direction by steering one, two or all wheels such that the axes of the one, the two or the four wheels are swiveled about a vertical axis.

The traction device comprises four wheels which are rotatable about corresponding four axes. The wheels may be passive wheels or may be driven wheels, which are driven by the first drive unit. All wheels may be driven by said drive unit or only one or some of the wheels may be driven by the drive unit.

According to the invention, the first and the second axis are arranged at the front end of the chassis frame and the third and the fourth axis are arranged at the rear end of the chassis frame. Whilst the mobile driving device may be configured to move forward and backward and to thus have no favorite driving direction, the designation of front end and rear end is understood to be interchangeable. The first and second axis, however, are arranged at an opposite end of the chassis frame versus the third and fourth axis in relation to the main driving direction of the mobile driving device.

According to the invention, the first axis is arranged in an offset distance to the second axis. According to this feature, the first and second axis are not arranged coaxially to each other but are offset to each other such that one of the first and second wheels may be positioned closer to the front end of the chassis frame than the other. The same applies to the third and fourth axis which are arranged in an offset distance to each other as well. Thus, one of the third and fourth wheel may be positioned closer to the rear end than the other.

By this arrangement, a particular problem is addressed which occurs if the mobile driving device with such a traction device including four or more wheels is moved over a ground surface with irregularities. Such irregularities may include humps, potholes, ribs, waves, steps or any other deviation from a plane ground surface. Much often, such irregularities extend in a transverse direction to the movement of direction of the mobile driving device. In such case, a mobile driving device having a wheel traction device may experience problems in crossing such irregularity or may conduct a relevant pitch movement or any other type of up or down movement when crossing such irregularity. Such movement in the up-down direction may cause noise or damage to the mobile driving device or a may hinder transport or transmission of load by the mobile driving device.

The reason for such up-down movement or the problem to cross such irregularity is considered to be the synchronous contact of the wheels at the front end to the irregularity or of the wheels at the rear end to the irregularity. By this, a sudden lifting or lowering takes place at the front end or the rear end, respectively, and this may cause the mobile driving device to get stuck at the irregularity or to conduct said unwanted up-down movement.

Various solutions are known in the prior art to overcome the problem of unwanted up-down movement of transport devices when moving over irregularities in the ground surface. DE 82 10 739 U1 discloses a system, wherein additional wheels are provided which provide additional support on the ground surface and thus may avoid that the wheels of one axis are stuck in a transverse recess or induce an up-down movement when crossing such transverse recess. However, this solution is expensive, since additional wheels must be provided and the solution is not able to overcome problems related to transverse ribs or humps.

EP 1 357 061 B1 discloses a transporting device having additional wheels beside the four wheels at the front and the rear end to overcome the problem. Again, the drawback of this solution is seen in increased costs and insufficient compensation of ribs and humps in the ground contact surface.

CN 203268812 U discloses a system wherein wheels are arranged on each of the four sides of the transporting device. Again, the system is expensive in manufacturing and maintenance costs and is not sufficient to overcome problems related to protruding irregularities from the ground surface.

FR 2 919 591 B1 discloses a transporting device having a total of eight wheels in ground contact and additional four wheels for a sideways guidance of the device. While this system may sufficiently overcome problems related to transverse recesses in the ground contact surface, it is not configured to level out recesses in the ground contact surface. Further, the system is considered to be expensive in manufacturing and maintenance.

According to the invention, the problem is overcome by an offset between the wheel axes at the front end and an offset between the wheel axes at the rear end. According to the invention, the problem is solved without the need of additional wheels and thus the mobile driving device may comprise no more than four wheels in ground contact. In particular, the traction device of the mobile driving device may consist of exactly four such wheels in ground contact.

According to the invention, an offset distance is provided between the first axis and the second axis and between the third axis and the forth axis. By this offset distance, it is not longer possible that both wheels at the front end or both wheels at the rear end simultaneously reach an irregularity which extends perpendicularto the driving direction of the mobile driving device. Instead, if one of the two wheels at the front end reaches such irregularity the other one of the two wheels will still be in a distance to said irregularity corresponding to the offset distance between the first and the second axis. The same applies to the two wheels at the rear end. By this, the impact on to the mobile driving device by such irregularity is minimized and the additional driving force required to move the mobile driving device over a hump irregularity is significantly decreased, since only one wheel after the other must be driven over such hump irregularity. Depending on the centre of gravity of the whole mobile driving device including a load carried by the device the impact and additional driving force required to move the mobile driving device over a recessed irregularity may be even zero in case that the wheel in contact to such irregularity does not enter into the recess but is guided without ground contact over such recess irregularity since the other three wheels carry the load for the part of said single wheel over the recess irregularity. However, even if the wheel may enter into the recess irregularity, the impact and the additional driving force required to move the mobile driving device over such recess irregularity will be decreased significantly.

According to a first preferred embodiment said first and said second offset distance are oriented in a direction parallel to said ground contact plane. According to this preferred embodiment the two offset distances are oriented in a horizontal distance such that the first and the second axis lie in a horizontal plane and the third and the forth axis lie in a horizontal plane. By this, a safe ground contact of the four wheels may be achieved in case that all four axes lie in the same horizontal plane. Whilst this generally is a preferred embodiment, specific configurations, e.g. for use on uneven ground surfaces other configurations may be preferred, e.g. configurations wherein one offset distances is not oriented in a horizontal direction but rather includes a vertical component such that usual ground contact is established by three wheels on and even ground surface only.

It is further preferred that said first to fourth axis extend along a direction parallel to said ground contact plane. According to this embodiment, a flat ground contact surface is achieved by each wheel which ground contact surface may extend along the direction of the axis of a wheel corresponding to the width of the wheel. By such horizontal orientation even irregularities like humps ore recesses in the ground contact surface which extend in an oblique direction to the direction of movement corresponding to a line connecting the first and second wheel contact surface, i.e. in a direction not exactly perpendicular to said direction of movement may be crossed by the mobile driving device with reduced impact and reduced additional energy. This benefit results from the fact that, even if such oblique-oriented irregularities may be contacted by the two wheels at the front end simultaneously, the ground contact surface of the wheels extending perpendicular to the direction of movement will help to reduce the magnitude of the impact and of the additional energy required to cross such irregularity since said contact surface will have initial point contact to such irregularity instead of line contact and this will avoid the wheels to conduct a simultaneous large downward movement into a recess irregularity or a simultaneous large upward movement over a hump irregularity.

Still further it is preferred that said first and third wheel are arranged at a first side of said chassis frame in a first wheelbase distance to each other and said second and fourth wheel are arranged at a second side of said chassis frame opposite to said first side in a second wheelbase distance to each other. According to this embodiment, each of the wheels at the front and each of the wheels at the rear end are arranged on apposite sides of the mobile driving device. By this, the wheels are arranged in the four corners of a rectangular chassis frame and thus provide a proper distribution of the load of the mobile driving device to the ground surface and an improved safety against any tilting about a horizontal axis of the mobile driving device.

Still further it is preferred that said first and said second offset distance are identical, said first and said second wheelbase distance are identical, said first and third wheel are guided by said first and second axis to run along a first single trail, and/or said second and fourth wheel are guided by said first and second axis to run along a second single trail. According to this embodiment, the two offset distances are of identical length and/or the wheel-base between the first and third wheel is identical to the wheel-base between the second and fourth wheel. Such identical offset distances and wheel-basis will provide for an optimized selection of geometric parameters of the traction device and a standardized axis suspension of the four wheels.

Still further, it is preferred that the orientation of the first and the third wheel is flush to each other such that the wheels run in a line to each other. The same may apply to the second and forth wheel. In particular, both wheel pairs on both sides may be flush to each other such that the mobile driving device has a ground contact surface of the wheels along two-parallel trails. This will significantly lower the risk to hit upon single irregularities on the ground surface.

According to a further preferred embodiment said chassis frame including said first to fourth wheels and axes has a center of gravity and said first to fourth wheel each define a corresponding first to fourth ground contact point, wherein said center of gravity is positioned in a horizontal distance of less then 25% of the bigger one of said first wheelbase distance and said second wheelbase distance from a point of intersection of a first diagonal line connecting said first and said fourth ground contact point and a second diagonal line connecting said second and said third ground contact point. According to this embodiment the center of gravity of the chassis frame including the four wheels and axes, i.e. the center of gravity of the mobile driving device as a whole but without any load carried or exerted by the mobile driving device is located close to a geometric center point between the four wheels. This geometric center point is defined as the point of intersection of two diagonal lines wherein each of said diagonal lines connects two different wheels on different sides and at different ends. By such arrangement of the center of gravity it is prevented that a single wheel is loaded with a high percentage of the total weight of the mobile driving device. The middle arrangement or close to middle arrangement of the center of gravity with respect the four wheels effects a load distribution onto the wheels wherein each of the wheels carries approximately 25% of the total weight of the mobile driving device. By this, the preferred embodiment allows a single wheel out of said four wheels to not enter into a recess irregularity in said ground surface since the other three wheels may take over the load of such single wheel. Further, even if such single wheel would enter into such a recess irregularity or if such single wheel conducts an upward movement onto a hump irregularity the load on such single wheel is such low that no significant impact is produced hereby.

Still further it is preferred that said chassis frame comprises a loading area having a center of area and said first to fourth wheel each define a corresponding first to fourth ground contact point, wherein said center of area is positioned in a horizontal distance of less then 25% of the bigger one of said first wheelbase distance and said second wheelbase distance from a point of intersection of a first diagonal line connecting said first and said fourth ground contact point and a second diagonal line connecting said second and said third ground contact point. According to this embodiment, the chassis frame comprises a loading area, namely a platform, loading platform or cargo area wherein a load like a box, a product or any other item or a plurality of such items can be places. The loading area may be a limited surface area which serves to establish a contact to a device which is driven by the mobile driving device. In particular, the loading area may be an upward facing contact area of the roller driving device.

The loading area has a geometric middle point and this geometric middle point is arranged close to the point of intersection of two diagonal line each connecting to different wheels, as explained before hand. By this, any load which is placed in the loading area wherein it is likely that the center of gravity of such load is close to the center of area of the loading area, namely the geometric middle point of such loading area is positioned close to the geometric middle point between the four wheels and thus the weight of such load is distributed rather evenly onto the four wheels. Again, as explained before hand, this avoids a single wheel to carry significantly more than 25% of the weight and thus helps to avoid or decrease impact induced by such single wheel when contacting an irregularity in the ground surface.

Still further according to a preferred embodiment said chassis frame including said first to fourth wheels and axes has a center of gravity and said first to fourth wheel each define a corresponding first to fourth ground contact point, and said chassis frame comprises a loading area having a center of area and said first to fourth wheel each define a corresponding first to fourth ground contact point,
- wherein said traction device defines a traction device center point being the point of intersection of a first diagonal line connecting said first and said fourth ground contact point and a second diagonal line connecting said second and said third ground contact point, and
- wherein said chassis frame has a chassis weight and said loading area has a maximum weight load capacity,
- said center of area is positioned in a relative distance from said center of gravity, said relative distance being less than A% of said bigger one of said first wheelbase distance and said second wheelbase distance,
- wherein said center of area and said center of gravity are positioned in a distance of less than 25% of said bigger one of said first wheelbase distance and said second wheelbase distance and wherein A = 25 × (CW / MWLC), preferably A = 10 × (CW / MWLC), if said center of area and said center of gravity are not arranged on opposite sides in relation to the first diagonal line or are not on opposite sides in relation to the second diagonal line, and
- wherein A = 50 × (CW / MWLC), preferably A = 25 × (CW/ MWLC), if said center of area and said center of gravity are arranged on opposite sides in relation to the first diagonal line and are arranged on opposite sides in relation to the second diagonal line,
- wherein CW is the chassis weight in kg and MWLC ist the maximum weight load capacity in kg.

According to this embodiment, a balanced positioning of a center of gravity as explained beforehand of the mobile driving device and a center of area as explained beforehand of a loading area is provided. By this balanced positioning of the center of gravity and the center of area the total weight resulting from the weight of the mobile driving device and the weight a load carried by the mobile driving device is positioned close to the middle point between the four wheels and thus it is avoided that a single wheel carries significantly more than 25% of such total weight. By this, the advantages explained beforehand, i.e. the low impact and reduced need for additional energy when crossing an irregularity by any single wheel out of said four wheels is achieved with respect to the total weight of the mobile driving device carrying a load.

Generally, it is understood that an arrangement of the center of gravity and of the center of area on opposite sides with respect to the point of intersection of the two diagonals connecting the four wheels is preferred and in such case the center of gravity and the center or area will lie on opposite sides with respect to both diagonals. In such a case, since the weight of the mobile driving device and the weight of the load will cause the center of gravity of the total weight to lie between the center of gravity of the mobile driving device and the center of the loading area a larger distance will be acceptable with between the center or area and the center of gravity. If, however, the center of gravity and the center of area lie in the same quarter defined by the two diagonals or in adjacent quarters defined by the two diagonals the distance between the center of gravity and the center of area should be smaller since such beneficial effect of compensation of weight forces is not achieved.

Still further it is preferred that said roller driving device comprises an upward facing contact surface for transmitting the driving force from said second drive unit. According to this embodiment an upward facing contact surface serves to transmit the driving force. Generally such way of transmission is favorable since the contact surface may stabilize the position of the roller driving device even if one of the wheels is without ground contact if a planar load is applied to such upward facing contact surface or multiple loads are applied to such contact surface at points distinct from each other. The mobile driving device in such case is sensitive to any tilting movement about a horizontal axis since this will cause a loss of contact between the upward facing contact surface and the rollers driven by said contact surface. This is safely overcome by providing said offset between the wheel axis such that a stable horizontal orientation on plane level can be maintained for the whole device even if e.g. one of the wheels is above a recessed irregularity in the ground floor.

According to a further preferred embodiment said first drive unit comprises a drive motor and a coupling arranged between said drive motor and said traction device and wherein said second drive unit comprises said drive motor and a second coupling arranged between said drive motor and said roller driving device. According to this embodiment, both the first drive unit and the second drive unit receive their driving force from the same motor such that only one motor could be employed at the mobile driving device. To allow independent control of the driving force of the first drive unit and the second drive unit, a coupling is arranged between the drive motor and the traction device and a further coupling is arranged between the drive motor and the roller driving device. These couplings are understood to be functionally arranged in the drivetrain of the driving force. The coupling may be a releasable clutch. Further, a gear could be arranged in the drivetrain or each drivetrain to effect a reduction or increase of the rotation and torque of the drive motor in relation to the movement of the traction device and the roller driving device and such gear may be integral with a coupling. It is further understood that additional couplings, clutches or gears may be present such as to allow a specific distribution of the driving force inside e.g. the traction device. By this, rollers, wheels or crawlertracks of the traction device can be driven in different speeds such as to effect a driving along a curved path or a rotation of the mobile driving device about its vertical axis or other type of movements.

According to a further preferred embodiment, said first drive unit comprises a first drive motor and said second drive unit comprises a second drive motor. According to this embodiment, both the first drive unit and the second drive unit each comprise a drive motor. Thus, the mobile driving device comprises at least two drive motors. By this arrangement, the first drive unit and the second drive unit can be controlled individually by controlling the first drive motor and the second drive motor, respectively. It is understood that this embodiment comprising two drive motors may be employed as an alternative to the embodiment explained beforehand, but may as well be a preferred embodiment of this embodiment such that a first drive motor is commonly used via two couplings for the first drive unit and the second drive unit and a second drive motor is additionally provided for driving the traction device or the roller driving device. It is generally understood that two drive motors to individually drive the traction device and the roller driving device may form a basic configuration, which could be equipped with further drive motors in any or both the traction device and the roller driving device to effect a more intelligent drive control and to provide additional functionality or power to these devices.

According to a further preferred embodiment, said traction device comprises; a roller arrangement, multiple wheels, a crawler track.

The configuration of the traction device may be designed in dependency from the required functionality and environment. If the mobile driving device is required to follow curved and straight paths and to be agile and have a high manoeuvrability, individual wheels at each corner of the device in e.g. a four-wheel arrangement, a setup with a crawler track comprising two tracks at each side of the device or the like may be preferred. The wheels, rollers or the crawler track may be steerable or may be in a fixed orientation in relation to the chassis frame. Generally, however, the traction device may even comprise two single rollers only, a three wheel-arrangement, a single crawler track or any other type of arrangement for propelling the mobile driving device.

It is understood that the traction device may at the same time serve to support the mobile driving device on the supporting surface like a ground surface. However, the traction device may as well be not in contact with the supporting surface but rather be in contact with other components like e.g. any components of the roller conveyor driven by the mobile driving device. In such case, additional rollers or wheels may be present, which support the chassis frame of the mobile driving device on the supporting surface and which may have no traction function or which may provide additional traction function to propel the mobile driving device.

According to a further preferred embodiment, said traction device is adapted to selectively move said chassis frame along a straight line or along a curved line on said supporting surface. According to this embodiment, the traction device is configured to selectively follow a straight line or a curved path. This could be employed by steering wheels or rollers or by wheels, rollers or crawler tracks with a fixed orientation in relation to the chassis frame, which can be controlled such as to provide different speeds at the two sides of the mobile driving device. Generally, the agility provided by this embodiment can be helpful to follow a straight and curved path of a roller conveyor and can be further employed to direct the mobile driving device on a short way to a destination at the roller conveyor, where it is to be employed as a driving device.

According to a further preferred embodiment, the mobile driving device is improved by a lifting device for lifting said roller driving device relative to said chassis frame. According to this embodiment, the roller driving device can be coupled to and decoupled from a single or a plurality of rollers of the roller conveyor by a lifting action. This allows to position the mobile driving device underneath a roller conveyor in a decoupled condition of the roller driving device and to couple the roller driving device to the rollers of the roller conveyor by a lifting action of the roller conveyor device. It is understood that at least parts of the roller conveyor device are raised during this lifting action to effect the coupling. The lifting device may further be employed to press components of the roller driving device against the roller or the plurality of rollers of the roller conveyor to effect a frictional force or a safe transmission of the driving force to the rollers. The rollers may be modified at their circumferential surface or part thereof to offer high frictional transfer of forces when engaging the roller driving device, like e.g. by knurling or specific coating.

It is particularly preferred that an extendable component is included in the lifting device, wherein said extendable component extends along at least a section of a belt like a chain, band or any other type of trum (strand). Said extendable component is adapted to be extendable in such a direction to establish contact to the rollers of the roller conveyor in an extended condition. The extendable component may be employed to harmonize the pressure exerted by a belt onto a plurality of rollers. The extendable component maybe further employed as a lifting device such that in a non-extended condition there is left a gap between the roller driving device and the rollers so that the rollers are nor driven. Generally, the extendable component may be in direct contact with the rollers in the extended condition but preferably, a belt like a chain, band or the like is interposed between the extendable component and the rollers. In particular, the roller driving device may comprise a support surface the extendable component being supported on said support surface and the belt being supported on said extendable component such that said extendable component is interposed between said support surface and said belt. Further, a slide transfer component may be interposed between said extendable component and said belt such that said slide transfer component is stationary versus said extendable component and said belt is sliding along said slide transfer component if the belt is driven.

The extendable component may be formed by a tubular body like a hose extend along the belt section. The tubular body may comprise an inner volume connected to a pressurized source of air to be pneumatically or hydraulically driven. A stopping element may be provided to limit the extent of extension of the extendable component. E.G. a slide transfer component may be guided by a guide member comprising an abutting surface to limit the range of movement of said slide transfer element.

The lifting device may be driven by a separate drive unit or may be integrally driven by the second drive unit.

It is understood, that as an alternative or additional feature the roller driving device and the traction device may be controlled by a control unit such that, with the chassis frame moving in relation to the rollers of the roller conveyor and the roller driving device being coupled to said rollers, the driving motion of the roller driving device is controlled to compensate the movement of the chassis frame and to maintain said rollers in a stationary, non-rotating condition. By this, the mobile driving device may be moved along the roller conveyor while being coupled to the rollers without effecting a rotation of the rollers such that a good on said roller conveyor will be kept stationary. With such a control, a lifting device may be omitted.

According to a further preferred embodiment, said roller driving device comprises a conveyor belt and a driving device for moving said conveyor belt. According to this embodiment a conveyor belt is driven by said second drive unit via a corresponding driving device for said conveyor belt.

It is generally understood that according to the invention a belt drive may be preferably be formed as an endless drive trum (strand), but in some embodiments a non endless-drive trum (strand) may be used as a belt drive, e.g. in a reciprocating drive pattern. Further, a belt is generally understood to be formed as any type of trum (strand) like e.g. a chain, a band, a toothed band or chain. A plurality of such trum (strand) may be arranged parallel to each other to form said belt.

The driving device may be a drum around which the conveyor belt is slung and the drum may be a drum motor to incorporate the second drive unit. The use of a conveyor belt in the roller driving device allows to effect a safe frictional engagement to a plurality of rollers of the roller conveyor and to drive these rollers into a conveying motion. The conveyor belt may provide a straight upper surface and may be supported such that a frictional engagement to a plurality of rollers is effected. The conveyor belt may be an endless belt and may have such an effective tractive length in contact to the rollers such that 2, 3, 4, 5, 6, 7, 8 or even more rollers are simultaneously in contact with the conveyor belt.

According to a further preferred embodiment said conveyor belt comprises a frictional surface facing upwards for engaging a frictional countersurface of one or a plurality of rollers of said roller conveyor device. Generally, the roller driving device can apply the driving force to the rollers of the roller conveyor from underneath such that a good to be conveyed by the roller conveyor may be positioned on top of the roller conveyor whilst the roller driving device is frictionally engaging the rollers from underneath opposed to said good.

According to a further preferred embodiment said roller driving device comprises a form locking element for a form locking engagement in the interspace between two rollers of said roller conveyor and a friction element for a friction engagement of at least one roller of said roller conveyor, wherein preferably said form locking element and said friction element are integrally formed by a transfer element for transferring forces by frictional and form-locking engagement. According to this embodiment the roller driving device is adapted to both engage in a form locking and a frictional engagement with the roller conveyor. This is achieved by a contact with the rollers of the roller conveyor such that the interspace between two rollers is used for a form-locking engagement and the roller surface is used for a frictional engagement. This can be achieved by an integral device. The twofold engagement can in particular be used to provide a driving action from the roller driving device to the rollers and at the same time to propel the roller driving device along the roller conveyor by said form locking engagement.

According to a further preferred embodiment said roller driving device comprises one or a plurality of friction wheels and preferably said second drive unit is adapted to drive said one or said plurality of friction wheels. In this embodiment a single or a plurality of friction wheels are employed to transfer the driving force from the roller driving device to the rollers of the roller conveyor. A single friction wheel may be used to establish contact to two rollers of the roller conveyor in that it is pressed against both rollers by being positioned into the gap between the two rollers. The friction wheel or the friction wheels may preferably have a diameter which is sufficient to contact both rollers for effective transmission of the driving force and the diameter of the friction wheel may preferably be larger than the diameter of the rollers of the roller conveyor. If a plurality of friction wheels are provided at the roller driving device these friction wheels may be aligned such as to provide a level and flush upper plane of the frictional circumference in the upper section of the friction wheels. The friction wheels may be arranged at the mobile driving device in such a way that the pitch of the friction wheels corresponds to the pitch of the rollers of the roller conveyor to be driven by the friction wheels, wherein the pitch is understood as the distance between two adjacent rotational axes of the rollers and the friction wheels, respectively. However, in other embodiments the position of the axes of the friction wheels may be variable such as to be able to adapt for different pitches of the rollers of the roller conveyor. In such case, a horizontal movement of the axes of the friction wheels or of a single axis of the friction wheels of the roller driving device may be functional to allow coupling of the roller driving device to roller conveyors having different pitches.

According to a still further preferred embodiment said roller driving device comprises said plurality of friction wheels and each friction wheel comprises a frictional circumferential drive surface for engaging a frictional countersurface of said rollers of said roller conveyor wherein further each frictional wheel is rotatable about a wheel axis, said wheel axes being arranged along an endless bearing trum (strand), wherein said endless bearing trum (strand) is driven by a trum (strand) drive unit and said friction wheels are driven by a wheel drive unit. According to this embodiment the friction wheels themselves are mounted to an endless bearing trum (strand) which could be an endless belt or chain or the like.

A preferred embodiment of a chain has friction plates on the outer circumferential surface to be in contact with the rollers and drive the rollers. In particular, a chain with two rows of such friction plates with the plates of the first row being in a staggered arrangement to the plates of the second row is preferred to realize a non-stuttering drive of the roller. The two rows of friction plates may also be realized with two separate chains or a twin chain. The advantage of two chains or a twin chain is, that the drive sprockets can be mounted in a slight angular rotation to each other about the axis of rotation of the drive sprockets. Hereby, the play between the chains and the sprockets can be minimized to improve a non-stuttering drive.

Said endless bearing trum (strand) serves to position the rotational axes of the friction wheels and to move said friction wheels along a closed path in relation to the chassis frame. By this embodiment it is possible to couple the friction wheels to a first set of rollers of the roller conveyor and to move the roller driving device along the track of the roller conveyor by coupling the friction wheels to other rollers of the roller conveyor subsequently. This movement along the track of the roller conveyor can be performed by continuous coupling of the friction wheels to rollers of the roller conveyor at one end of the endless bearing trum (strand) and continuous decoupling of the friction wheels from the rollers of the roller conveyor at the other end of the endless bearing trum (strand) by moving the endless bearing trum (strand). Thus, raising and lowering of the whole roller driving device may not be required for this movement to follow the track of the roller conveyor.

As a second function of this possibility to continuously couple and decouple the friction wheels to and from the rollers the movement of the endless bearing trum (strand) may serve as a traction device such that the mobile driving device is driven along the track of the roller conveyor by this type of traction device being incorporated into the endless bearing trum (strand) of the roller driving device.

Thus, it is further preferred that said traction device comprises said endless bearing trum (strand) and said first drive unit is adapted to drive said endless bearing trum (strand). According to this embodiment the driving force to propel the mobile driving device is effected onto the endless bearing trum (strand) and thus the mobile driving device is propelled by the movement of this endless bearing trum (strand). In particular, this movement will allow to precisely follow the track of a roller conveyor if the friction wheels supported at the endless bearing trum (strand) are in contact to the rollers of the roller conveyor. It is generally understood that the friction wheels may be driven by a mechanical engagement using the driving force of the first drive unit as well. Still further it is to be understood that the second drive unit may be coupled to the friction wheels such as to effect a rotation of the friction wheels about their rotational axes such that the rotation of the friction wheels can be controlled independently from the movement of the endless bearing trum (strand).

Generally, it is to be understood that the movement of the endless bearing trum (strand) and the rotation of the friction wheels can be controlled in such a way that the circumferential surface of the friction wheels conduct a relative motion which is oriented such that the friction wheels move twice as fast at their top end and reverse to the endless bearing trum (strand). This will allow to move the friction wheels along a track of the roller conveyor and to drive the rollers of the roller conveyor by frictional engagement between the friction wheels and the rollers from underneath and to hereby propel the mobile driving device with the same speed as a good transported on top of the roller conveyor by the driving action of the friction wheels. Thus, the good to be transported and the mobile driving device move synchronously along the roller conveyor track and the friction wheels provide the driving force to the rollers by a double speed reverse rotation from underneath to the rollers.

According to a further preferred embodiment, wherein said chassis frame is supported on said supporting surface by an undercarriage adapted for passive motion or driven motion, the mobile driving device can be further improved by a control unit adapted to control said first drive unit such that
- in a first traction mode said endless bearing trum (strand) is driven by said first drive unit and said undercarriage are maintained in a passive motion status,
- in a second traction mode said endless bearing trum (strand) is maintained in a passive motion status and said undercarriage is driven.

According to this embodiment, two different modes for driving the mobile driving device can be selected. In a first traction mode, the endless bearing trum (strand) is driven and thus, the friction wheels may be supported by e.g. a frictional force or a form locking action such as to act against a counterface to drive the mobile driving device hereby. Thus, in this first traction mode, the motion of the endless bearing trum (strand) serves to propel the mobile driving device. The undercarriage is thus maintained in a passive motion status and only serves to carry the weight of the mobile driving device and allow the mobile driving device to slide or roll over said supporting surface. A passive motion status is understood to allow the undercarriage to follow the movement of the mobile driving device, such that in the passive motion status the undercarriage does neither provide a driving force nor a braking force. In a second traction mode, the undercarriage is driven and thus provides the propelling force for the movement of the mobile driving device over the ground surface. In this second traction mode, the endless bearing trum (strand) is maintained in a passive motion status and thus the friction wheels and the endless bearing trum (strand) may perform a relative movement versus the mobile driving device or at the mobile driving device without providing a driving or braking force to the motion of the mobile driving device over the supporting surface.

According to a further preferred embodiment said friction wheels are driven by a drive surface. According to this embodiment, a drive surface is present, which may contact the friction wheels as a tangential surface to a circumferential surface coupled to or embodied at the friction wheels. This particular arrangement of a drive surface allows rotating the friction wheels by a translational movement of the rotational axis of the friction wheels accomplished by movement of the endless bearing trum (strand) or any other type of guidance and movement of the rotational axis. The drive surface may directly act against the frictional circumferential surface of the friction wheels, which at the same time transfers the driving force to the rollers of the roller conveyor driven by the mobile driving device. Alternatively, the friction wheels may be coupled to a circumferential surface which may have a smaller diameter than the circumferential surface of the friction wheels being in contact with the rollers of the roller conveyor. By this, an increased rotational speed of the friction wheels when driven by a translational movement of the rotational axis along a drive surface being stationary at the mobile driving device will be achieved, thus allowing to drive the mobile driving device along a track of a roller conveyor and to direct the friction wheels along an endless bearing trum (strand) such that a relative movement of the rotational axis is stationary for those friction wheels being in contact with the rollers of the roller conveyor and to drive the rotation of the friction wheels by a contact to a drive surface, which is stationary at the mobile driving device and thus moving with the mobile driving device in relation to the rotational axes of those friction wheels, which are in contact and stationary with the rollers of the roller conveyor.

In a preferred embodiment hereto said drive surface is a fixed surface or said drive surface is arranged at a drive belt and said drive belt is driven by a drive unit or is kept in a stationary position. According to this embodiment, the drive surface may be a fixed surface to allow functionality and relative rotation of the friction wheels and the movement of the rotational axes of the friction wheels as described beforehand. Further, the drive surface may be arranged at a drive belt, which may be controlled such that it is driven by a drive unit to be in relative motion to the chassis frame of the mobile driving device or to be kept stationary in relation to said chassis frame. This arrangement will allow bringing the friction wheels into rotation even if the mobile driving device is kept stationary to the roller conveyor, which is driven by the friction wheels in that the drive belt is moved and thus drives the friction wheels into rotation. In particular, said drive belt may be arranged in a parallel arrangement to the endless bearing trum (strand) at which the rotational axes of the friction wheels are located.

According to a further preferred embodiment, the mobile driving device is improved by an energy storage device connected to said first and second drive unit. Such an energy storage device will allow the mobile driving device to move without the need for external energy supply and to drive a roller conveyor without such need of external energy supply. The energy storage device may be coupled to the first and second drive unit to supply energy to these drive units. The energy storage device may be adapted for storing or producing electrical energy like, e.g. by using a battery or a rechargeable battery or a hydrogen fuel cell as energy storage device.

According to a further preferred embodiment, the mobile driving device is improved by characterized by a control unit coupled to said first drive unit, wherein said control unit is adapted to control said first drive unit such that said first drive unit drives said chassis frame along a predetermined path on said supporting surface or to a predetermined destination on said supporting surface. According to this embodiment, the mobile driving device further comprises a control unit, which is adapted to control the movement of the mobile driving device in terms of speed and direction. By this, the mobile driving device can be driven along a predetermined path or driven to a predetermined destination on said ground surface. Such control of the movement may be preprogrammed and stored in a memory coupled to the control unit or transmitted to the control unit from an external central control device. It is further understood that the control unit may be adapted to control this movement as an independent and intelligent movement of the mobile driving device by relevant input from sensors or the like giving information about the environment to the control unit. Further, the control unit may alternatively be or additionally be adapted to receive real-time control signals containing information about a predetermined path or a predetermined destination from an external control unit being in wireless communication for data transfer with the control unit on board of the mobile driving device. Still further, the control unit may be adapted to control the first drive unit such as to fulfil a certain conveying action when the mobile driving device is in contact with a roller conveyor and drives the roller conveyor. It is understood that the control unit may further be coupled for signal transmission to the second drive unit to both control the first drive unit and the second drive unit for conducting specific predetermined conveying actions at the roller conveyor.

Still further, said mobile driving device can be further improved by said supporting surface extends along an X-axis and a Y-axis defining a coordinate system, wherein said control unit is adapted to control said first drive unit such that said chassis frame is positioned in a predetermined orientation in relation so said coordinate system on said supporting surface. According to a further preferred embodiment, the control unit is additionally adapted for positioning the mobile driving device in a specific orientation in relation to the vertical axis on the supporting surface like e.g. a ground surface. Such predetermined orientation will be helpful to ensure a safe and correct coupling of the roller driving device to a roller conveyor to drive said roller conveyor thereafter.

According to a further preferred embodiment, the mobile driving device is improved by a control unit coupled to said first drive unit and said second drive unit, wherein said control unit is adapted to control said first and second drive unit such that in a first mode said first drive unit is stopped and said second drive unit is driven, in a second mode said first drive unit is driven such that said chassis frame moves along said supporting surface with a first velocity and said second drive unit is driven such that a frictional surface of said roller driving device is driven with a second velocity, said second velocity being twice as high as the first velocity. According to this embodiment, the control unit is adapted to control the traction device and the roller driving device in at least two modes.

In the first mode, the first drive unit is stopped such that the traction device does not move the mobile driving device across the ground surface and the second drive unit is driven such that the roller driving device drives the rollers of the roller conveyor and thus effects a conveying of the goods on the roller conveyor. In this first mode, it is understood that the goods on the roller conveyor are conveyed relative to the mobile driving device and thus, the distance between the mobile driving device and the goods is increased by this conveying action. This will typically result in the goods being moved out of the conveying zone, which is driven by the roller driving device and thus, the first mode can be used to handle over a good on the roller conveyor to another position out of the range of the mobile driving device like e.g. to the downstream conveyor zone.

In the second mode, the mobile driving device is moved across the ground surface with a first speed and the roller driving device is driven with a second speed at the frictional surface of it, which is in contact with the rollers of the roller conveyor. By this, a driving force can be transferred to the rollers of the roller conveyor, which is compensating the relative movement of the roller driving device in relation to the rollers and further effects a driving force onto the rollers to convey a good positioned on these rollers with the same velocity as the speed of the movement of the mobile driving device, i.e. with the first velocity. By this, the mobile driving device and the good(s) on the roller conveyor will move synchronously and the good(s) can be conveyed by the driving force of the mobile driving device along the whole track of the roller conveyor and across several conveyor zones.

Still further, the mobile driving device can be improved by a control unit coupled for signal transmission to said first drive unit for driving said chassis frame, wherein said control unit is coupled for signal transmission to a sensor device arranged at said chassis frame said sensor device being adapted to recognize an object in the environment of said chassis frame and to send a sensor signal to said control unit in case of an object being recognized, wherein preferably said control unit is adapted to control said drive unit such as to avoid a collision with said object. According to this embodiment, the mobile driving device is equipped with at least one sensor like a camera adapted to recognize an object. The object may be an obstacle or a structure or pattern serving to provide information about the position and/or orientation of the mobile driving device. E.g. the object may be a pattern like a printed code, a bar code or an RFID tag which is sensed by the sensor wherein the control unit is adapted to extract from said sensor signal an information about the roller conveyor to which the mobile driving device is currently engaged or a position along the conveying path of such a roller conveyor. In particular, the control unit may be adapted to determine such position along the conveyor path by identifying a predetermined object, comparing the size of the object as detected by the sensor with another size of an object and to calculate the distance of the sensor from the object from said comparison step. The other object which size is compared may be a reference value stored in a memory of the control unit or may be another object at another location which is detected by the sensor or another sensor connected to said control unit. In particular, the two objects which size is compared bay the control unit may be arranged at opposed sides of the mobile driving device. By this, the position may be determined rather precisely. The object may comprise an individual code to allow determination of a position along a conveyor track and identification of the conveyor track by the control unit at the same time.

Still further, according to this embodiment, the mobile driving device may be equipped for autonomous driving or partial autonomous driving in that it is equipped with said one or a plurality of sensors for detecting any marks or obstacles in the environment. The control unit may hereby be able to control the traction device in such a way that a predetermined destination is reached by selecting an individual and intelligent path avoiding obstacles on the way to the predetermined destination.

In particular, it is preferred that said sensor device is a camera wherein said control unit is adapted to process an image signal provided by said camera such as to identify said object. Generally, a single camera or two cameras being directed in different directions may allow detecting any obstacles in the environment of the mobile driving device. In such case, an image processing is conducted by the control device to identify such obstacles and to recognize any landmarks or other signs in the environment of the mobile driving device.

Still further it is preferred that said traction device is adapted to support said chassis frame on a supporting track surface formed at the roller conveyor. By this, the chassis frame can be guided by and safely moved in or on a frame of a roller conveyor. E.g. in a simple and durable setup the traction device may be supported on two sideway frame profiles of the roller conveyor in which the rollers are rotatably mounted and thus be installed underneath the rollers to move along said sideway frames.

Finally, the mobile driving device can be further improved by a conveyor track section comprising a supporting track surface, wherein said conveyor track section comprises a conveyor track section traction device and is adapted to couple to a first conveyor track in a first position of the conveyor track section, to move to a second position by driving the conveyor track section traction device and to couple to a second conveyor track in said second position of the conveyor track section, wherein preferably said conveyor track section traction device is adapted to move said conveyor track section in a direction orthogonal to a conveying direction of said first conveyor track. In this embodiment the mobile driving device is adapted to be positioned in or at a conveyor track section which itself is movable on a ground floor or any other supporting surface. The conveyor track section itself comprises a supporting surface to carry the traction device of the mobile driving device. By this, the mobile driving device is movable together with the conveyor track section and may be moved to a conveyor track hereby. If the conveyor track section is coupled to a conveyor track of the roller conveyor, the mobile driving device may move out of the conveyor track section and move along the whole conveyor track. The conveyor track section may be adapted to take up a good or a pallet on top of the rollers of the conveyor track section such that this good or pallet is moved together with the conveyor track section from one conveyor track to another conveyor track.

According to a further aspect of the invention is a method of conveying goods on a roller conveyor, comprising the steps of driving a chassis frame to the roller conveyor by a traction device arranged at said chassis frame, coupling a roller driving device arranged at said chassis frame to the roller conveyor, driving rollers of said roller conveyor by a frictional engagement, wherein said frictional engagement is established between a friction wheel or a conveyor belt of said roller driving device.

In the method, the mobile driving device is moved by the traction device via a first wheel rotating about a first axis, a second wheel rotating about a second axis, a third wheel rotating about a third axis and a fourth wheel rotating about a fourth axis, wherein said first, second, third and fourth axis are parallel to each other in a straightforward driving condition wherein said mobile driving device moves along a straight line, wherein said first and said second axis are arranged at a front end of said chassis frame and said third and said fourth axis are arranged at a rear end of said chassis frame. Said first axis is arranged in a first offset distance to said second axis, and said third axis is arranged in a second offset distance to said fourth axis such that each of the first, second, third and fourth wheel come into contact with a straight obstacle on a ground surface extending perpendicular to the direction of movement of the mobile driving device on said ground surface at different times.

The method can be improved in that the friction wheel or the conveyor belt is moved in relation to the chassis frame and the chassis frame is moved in relation to the roller conveyor.

The method can be further improved in that the frictional engagement is established by lifting the friction wheel or the conveyor belt in relation to the chassis frame.

Still further, the method can be improved in that the chassis frame is driven along the roller conveyor.

Finally, the method can be improved in that the frictional engagement is established by a plurality of friction wheels, and wherein each friction wheel is rotating about a wheel axis and the wheel axes are moved along an endless path.

The method of the invention and the preferred embodiments of the method can be preferably conducted using the mobile driving device explained beforehand. It is understood that the specific aspects and features of the method as well as the functions thereof correspond to the respective features, functions and aspects of the mobile driving device as described beforehand and thus reference is made to the explanation given hereto with reference to the mobile driving device.

Preferred embodiments of the invention are described with reference to the figures. In the figures:
- Fig. 1: shows a schematic side view of first embodiment of a mobile driving device,
- Fig. 2: shows a top view on the first embodiment shown in Fig. 1.
- Fig. 3: shows a schematic view of a mobile driving device according to the first or second embodiment showing the details of sensor detection of the environment.
- Figs. 4a-c: show a schematic partial view of the first embodiment in three different modes of operation,
- Fig. 5a: shows a second embodiment of the mobile driving device according to the invention in a schematic view of a first mode of operation,
- Fig. 5b: shows the second embodiment of Fig. 5a in a second mode of operation,
- Figs. 6a-c: show a schematic partial view of the second embodiment in three different modes of operation,
- Figs. 7a-b: show a schematic perspective view of a mobile driving device according to the invention installed in an arrangement of two roller conveyors,
- Fig. 8: shows a perspective partial view of an embodiment of a belt drive for driving rollers of a roller conveyor,
- Fig. 9a: shows a cross sectional partial view of a pneumatic lifting device according one embodiment of the invention in a lowered position,
- Fig. 9b: shows a side sectional partial view of a pneumatic lifting device according to Fig. 9a in a lowered position,
- Fig. 10a: shows a cross sectional partial view of the pneumatic lifting device according to Fig. 9a in a raised position,
- Fig. 10b: shows a side sectional partial view of a pneumatic lifting device according to Fig. 9a in a raised position.
- Fig. 11a-d: show three different embodiments of a mobile driving device according to the invention in a schematical top view with different load and weight distribution, and
- Fig. 12a, b: show two different embodiments of a mobile driving device according to the invention in a schematical top view with different wheelbase and offset arrangements of the wheel axes.

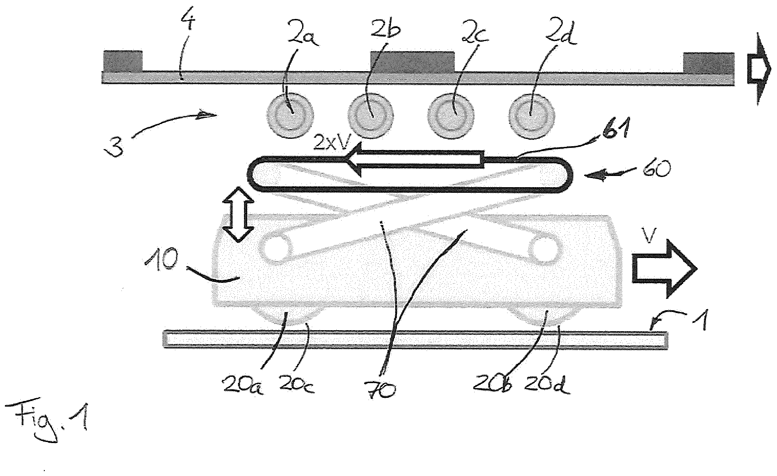

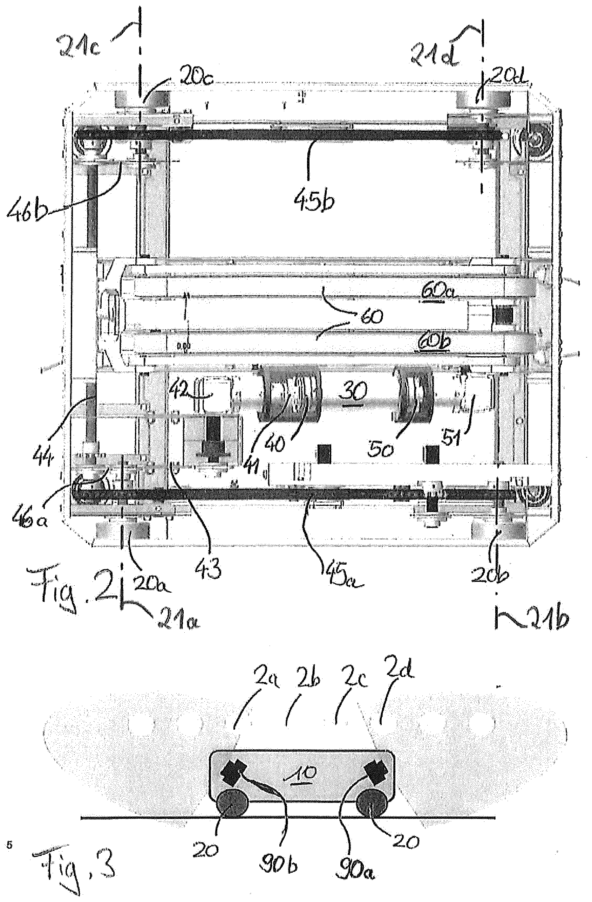

Making reference first to Figs. 1 and 2, a mobile driving device according to a first embodiment of the invention comprises a chassis frame 10, which is supported on a ground surface 1 by four wheels 20a-d. The wheels are positioned basically at the four corners of the device. The wheels are arranged to support the chassis frame on a ground surface. Basically, the wheels may support the device on rails or on any surface provided within a frame like a roller conveyor frame. Each of the wheels is rotatable about a wheel axis 21a-d, wherein the wheel axes 21b, d at the one end of the chassis frame are parallel and offset to each other and the wheel axes 21a, c at the other end of the chassis frame are parallel and offset to each other.

Inside the chassis frame, an electric motor 30 is installed. The electric motor 30 is coupled at one end of the motor via a clutch 40 incorporating a brake 41 to a transmission system. The transmission system comprises a gear 42, a belt transmission 43 to a shaft 44, which shaft is distributing the driving force of the electric motor 30 to both sides of the chassis frame.

A belt transmission 45a,b from the shaft 44 distributes the driving force from the shaft 44 at one end of the chassis frame to the opposed end of the chassis frame. The wheels 20a,c adjacent to the shaft 44 are driven by a gear 46a, b from the shaft 44 and the wheels 20b,d are driven via the belt transmission 45a,b such that a four-wheel driven chassis frame is provided in this embodiment.

It is understood that the belt transmission 45a,b could be omitted thus resulting in a two-wheel drive by the wheels 20a,c. it is further understood that the shaft 44 and the belt transmission 45b could be omitted thus resulting in a two-wheel drive on one side of the chassis frame by the wheels 20 a,b.

The electric motor 30 is coupled via a second clutch 50 at the other end opposed to the clutch 40 to a gear 51, which is coupled to an endless drive trum (strand) 60. The endless drive trum (strand) is configured as a belt transmission comprising two parallel endless chains 60a, b with frictional pads at the outer surface. These two parallel chains serve to couple by frictional engagement to the rollers 2a-d of a roller conveyor 3 and by driving the endless chains, the rollers can be put into rotation to convey a pallet 4 lying on top of the rollers 2a-d.

As can be seen in Fig. 1, the endless chain 60a,b is coupled to the chassis frame 10 via a lifting device 70, which allows to raise the endless chain or to lower the endless chain in relation to the ground surface 1. By this, the endless chain 60a,b can be coupled to the rollers 2a-d of a roller conveyor 3 such as to have frictional engagement to a bottom circumferential section of the rollers. The lifting device 70 may exert a contact pressure sufficient to transfer a frictional driving force to the rollers for conveying the pallet 4 lying on top of the rollers 2a-d. As can be seen in Fig. 1 in a typical mode of operation, wherein the pallet 4 shall be conveyed along the conveyor track by the mobile driving device, the mobile driving device is driven across the ground surface with a constant speed v and the endless chain is driven with a constant speed 2 * v, which is twice the speed of the chassis frame over the ground surface. The endless chain is driven in a direction such that the upper section 61 moves in an opposite direction in relation to the movement of the chassis frame over the ground surface. By this, the pallet 4 and the chassis frame 10 will move synchronously along the track of the roller conveyor 3 and the pallet 4 can be conveyed by the mobile driving device along the whole conveyor track.

Fig. 3 shows a schematic side view of a chassis frame 10 with wheels 20 and it is understood that the features and details shown in this embodiment could be applied to both the first embodiment explained beforehand and the second embodiment described hereafter. As can be seen, two time of flight cameras 90a,b are mounted to the chassis frame 10 at the front end and the rear end and are oriented to observe the environment before and behind the chassis frame. It is to be noted that the time of flight cameras both observe the horizontal space in front and behind the chassis frame and further observe the space between and above the rollers of a roller conveyor positioned above the chassis frame. By this, the time of flight cameras can detect both an obstacle and any marks in the pathway of the chassis frame or sideways thereof and a pallet on top of the roller conveyor. An image analysis by a control unit of the images detected by the two time of flight cameras thus allows precisely determining whether a pallet is in the range or above the chassis frame and to control the movement of the chassis frame in such a way as to position the chassis frame exactly below such a pallet.

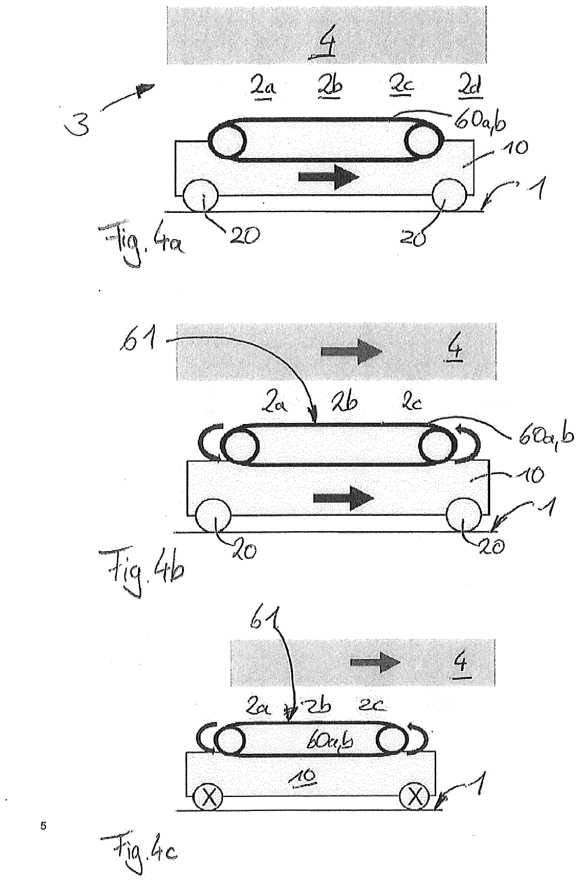

Making reference now to Figs.4a-c, three different modes of operation are shown in these figures.

In Fig. 4a, the chassis frame 10 is moving across the ground surface by the wheels 20 being driven and the endless chains 60a,b are not coupled to the roller conveyor. By this, the mobile driving device can be positioned at a location underneath the rollers of the roller conveyor 3.

In Fig. 4b, the endless chains 60a,b are coupled to the rollers 2a-c of the roller conveyor by contacting the bottom circumferential part of the rollers. The chassis frame 10 is driven by the wheels 20a-d and the endless chains 60a,b are driven as well. In this operation mode, the driving speed of the endless chains 60a,b is twice as high as the driving speed of the chassis frame 10 and the movement of the upper section 61 of the endless chain, which is in contact with the rollers versus the chassis frame is opposite to the direction of movement of the chassis frame over the ground surface 1. By this, the rollers 2a-c of the roller conveyor are rotated such that a pallet 4 positioned on top of these rollers is driven synchronously with the chassis frame 10, i.e. with the same speed and direction of the chassis frame 10 over the ground surface 1. By this, the pallet 4 can be moved along the conveyor track formed by the rollers continuously by the mobile driving device.

In the operational mode shown in Fig. 4c, the chassis frame 10 is kept stationary on the ground surface 1 and the endless chain 60a,b is driven. In this operation mode, the pallet 4 may be handed over to an adjacent downstream or upstream zone of the conveyor track. The speed of the endless chain will in this case correspond to the conveying speed of the pallet 4 and may be identical to the speed of the chassis frame over the ground surface in Fig. 4b, but is directed in in the same direction as in Fig. 4b. By this, a constant conveying speed can be maintained from Fig. 4b to Fig. 4c.

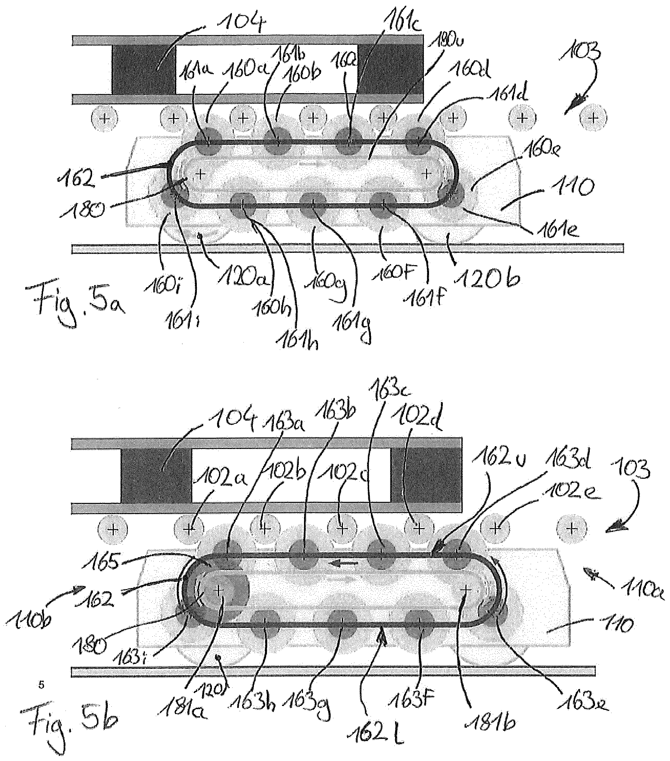

Making reference now to Fig. 5a and 5b, a second embodiment of the invention comprises a chassis frame 110 and traction wheels 120a,b in an arrangement similar to the arrangement of the first embodiment. Again, the traction wheels 120a,b can be driven by an electrical motor and two-wheel drive or four-wheel drive or even a single-wheel drive may be realized.

In the second embodiment, the roller driving device comprises a plurality of friction wheels 160a-i, in total, nine such friction wheels are embodied, but it is understood that another number of friction wheels may be present in variations hereof as well. Each friction wheel 160a-i is mounted for a rotational movement about a rotational axis 161a-i and said rotational axes 161a-i are mounted to an endless bearing trum (strand) 162. The endless bearing trum (strand) 162 is guided along an oval path with a flat upper and flat bottom track section. The friction wheels 160a-i are distributed evenly along the endless bearing trum (strand) 162 and the rotational axes 161a-i move together with the endless bearing trum (strand) 162 along the oval path.

As can be seen from the figures 5a,b generally, the friction wheels 160a-d in the upper track section 162u are in frictional engagement with rollers 102a-e of a roller conveyor 103 positioned above the friction wheels. Each friction wheel in the upper track 160u is in contact with two rollers of the roller conveyor and each roller of the roller conveyor is in contact with two friction wheels. The friction wheels in the lower track section 162l and in the front and end section wherein the friction wheels change between the upper and the lower track section are not in contact with the rollers of the roller conveyor. Since each friction wheel reaches into the space between two rollers a frictional and formlocking engagement is established between the friction wheels and the rollers.

A rotational movement of the friction wheels 160a-l about the rotational axes 161a-i will drive the rollers 102a-e of the roller conveyor 103 and will thus effect a conveying action onto a pallet 104 positioned on top of the rollers of the roller conveyor as shown.

In the depicted arrangement of figures 5a,b the friction wheels may turn anti-clockwise to move the pallet 103 to the right, thus, the upper frictional surface of the friction wheels moves to the left, i.e. opposite to the movement of the pallet 103.

The friction wheels are driven by a drive belt 180. The drive belt 180 runs parallel to the endless bearing trum (strand) 162, but is positioned inside the path defined by the endless bearing trum (strand) 162. The drive belt 180 is guided by two drums 181a,b at the front end and at the rear end of the chassis frame 110.

The drive belt 180 is in frictional engagement with friction drive rollers 163a-i, which are coaxial and mechanically coupled to the friction wheels 160a-i. Thus, each friction wheel 160a-i is mechanically coupled to a friction drive wheel 163a-l to be driven by the drive belt 180.

Still further, it is understood that the guidance of the endless bearing trum (strand) may be provided by endside drums 165 which are coaxial to the endside drums 181a,b. Alternatively the guidance of the endless bearing trum (strand) 162 may be provided by the contact of the friction drive wheels 163a-i being in contact with the drive belt 180. Thus, the endless bearing trum (strand) 162 does not necessarily require a separate guiding by drums or the like. However, it is understood that the endless bearing trum (strand) may be guided by rails, drums or the like.

The diameter of the friction drive wheels 163a-i is half of the diameter of the friction wheels 160a-i, thus effecting a gear transmission from the drive belt 180 to the friction circumferential surface of the friction wheels 160a-i.

In the operation mode shown in Fig. 3a, the traction wheels 120a,b are driven clockwise such as to propel the chassis frame 110 in a first direction to the right in the figure. The friction drive belt 180 is driven with the same speed as the wheels 120a and the upper track section 180u is driven into the first direction to the right, i.e. in the same direction as the movement of the chassis frame 110. By this, the friction wheels 160a-l are driven anti-clockwise with a double speed at the circumferential frictional surface being in contact with the rollers of the roller conveyor. By this, the movement of the chassis frame is overcompensated and the rollers 102a-e are driven with such a speed as to convey the pallet 104 with the same speed like the chassis frame 110 such that chassis frame and pallet 104 move synchronously along the track of the roller conveyor 103. The endless bearing trum (strand) 162 is kept in a passive mode such that it can follow the relative movement of the friction wheels in relation to the chassis frame. Thus, the upper track section 162u moves backward in relation to the chassis frame and opposite to the direction of movement of the chassis frame.

In the operational mode shown in Fig. 3b, the friction drive belt 180 is driven in the same way as in the operational mode of Fig. 3b, i.e., the upper track section 180u is driven in a first direction to the right. In this operational mode, the traction wheels 120a-b are kept passive, so that no driving or braking force is effected by these traction wheels, but the wheels are free to role and to follow the movement resulting from forces acting onto the chassis frame.

The endless bearing trum (strand) 162 is driven by a drum 165, which is coaxial with the left drum 181a of the friction drive belt 180. The movement of the endless bearing trum (strand) 162 is opposite to the movement of the friction drive belt 180 and at the same speed. By this, the rotational axes 161a-i are moved by the endless bearing trum (strand) 162 and thus the friction wheels 160a-l engage in a form locking force transfer action with the rollers 102a-e of the roller conveyor 103. By this, a driving force is transmitted by horizontally supporting the friction wheels at the rollers of the roller conveyor and driving the endless bearing trum (strand) with the friction wheels fixed thereto. Thus, the general type of motion of the operational mode, shown in Fig. 3b, is similar to the mode shown in Fig. 3a, but the driving force results from the driven endless bearing trum (strand) 162 in Fig. 3b and results from driven traction wheels 120a,b in Fig. 3a. In both operation modes, the friction wheels 160a-l subsequently engage with the rollers of the roller conveyor at the front end 110a of the chassis frame and disengage from the rollers of the roller conveyor at the rear end 110b of the chassis frame. Thus, a type of horizontal climbing action of the friction wheels at the rollers of the roller conveyor takes place and provides the driving force.

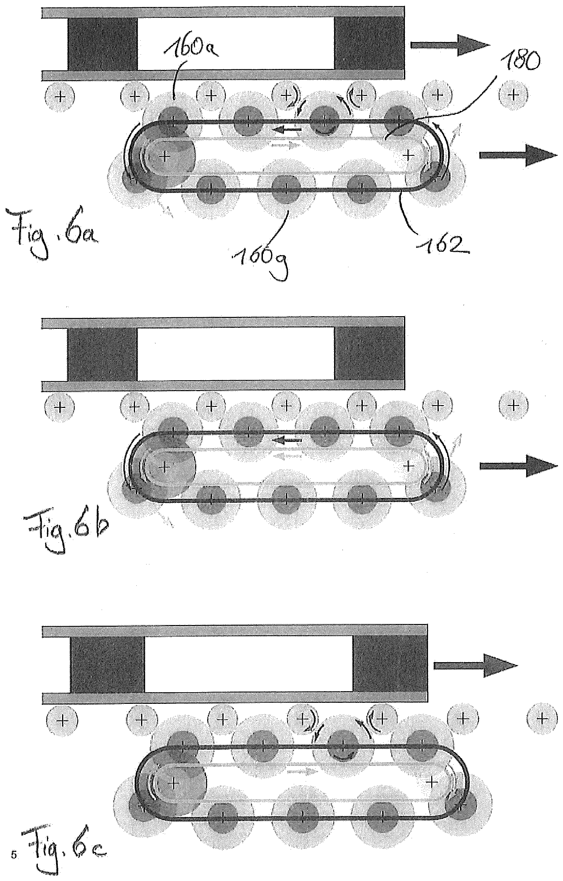

Figs. 6a-c show three different operational modes and it is generally understood that both modes of figures 6a and 6b could be accomplished with either driven wheels and passive endless bearing trum (strand) according to Fig. 5a or passive wheels and driven endless bearing trum (strand) according to Fig. 5b.

In the operational mode of Fig. 6a, the upper track section of the friction drive belt 180 is driven in a first direction to the right and thus propels the friction wheels 160a-i and the chassis frame is driven in the first direction to the right, which is realized in this depicted configuration by driving the upper track section of the endless bearing trum (strand) 162 in a second direction to the left opposite to the first direction. By this, the chassis frame and the pallet are moved synchronously along the conveyor track.

In the operational mode shown in Fig. 6b, the chassis frame is driven in the first direction in the same way, which is again accomplished by driving the upper track section of the endless bearing trum (strand) 162 in the second direction. In this operational mode, the upper track section of the drive belt 180 is driven in the second direction as well, thus compensating the movement of the rotational axis with the endless bearing trum (strand) and maintaining the friction wheels 160a-i in a non-rotating position about the rotational axes 161a-i. By this, the chassis frame is driven along the conveyor track and the pallet is kept in a fixed position on top of the rollers of the roller conveyor.

In the operational mode shown in Fig. 6c, the chassis frame is kept in a fixed position by blocking the endless bearing trum (strand) 162 in a constant fixed position or by blocking the traction wheels 120a,b by a brake. The upper track section of the friction drive belt 180 is driven in the first direction to the right thus driving the friction wheels 162a-i counterclockwise. By this, the pallet 104 is driven in the first direction to the right by keeping the chassis frame fixed. By this, the pallet 104 can be handed over to a downstream conveyer zone on the right.

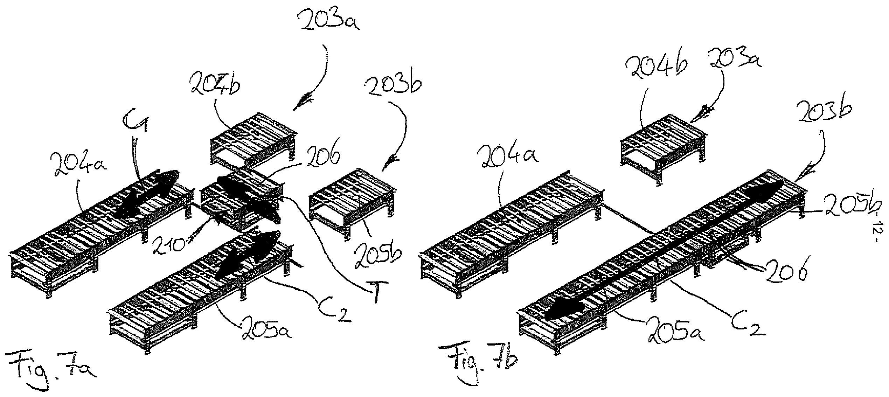

Making reference to figures 7a, 7b a conveyor arrangement comprising to conveyor tracks 203a, b is shown. Each conveyor track 203a, b comprises a plurality of rollers which are arranged in a conveyor frame 204a, b, 205a, b.

A conveyor track module 206 is adapted to fit between the conveyor track sections 204a, b or to fit between the conveyor track sections 205a, b. The conveyor track module is adapted to move in a direction perpendicular to the conveyor direction of the conveyor tracks 203a, b and thus can be moved a position between the conveyor track sections 204a, b into a position between the conveyor track section 205a, b and vice versa. The conveyor track module 206 completes the conveyor tracks to a continuous track if it is in a position to fill the gap between the conveyor track sections 204a, b or 205a,b, respectively.

In the conveyor track module a chassis frame is support with wheels at the frame sections of the conveyor track module. The chassis frame is oriented to move in the conveying direction of the conveyor tracks 203a,b. The chassis frame may be equipped with a roller conveying device and may be formed like the first of the second embodiment explained beforehand. It is understood that the mobile track section 206 and the mobile driving device positioned therein form an exchangeable mobile driving device between two track sections. If the mobile track section 206 is coupled between two conveyor track sections 204a, b or 205a, b, the mobile driving device may move along the whole track section 203a or 203b, respectively and thus e.g. move a pallet along this conveyor track section. The pallet may be positioned on top of the mobile track section 206 and be transported together with the mobile driving device in the mobile track section to the other conveyor track section. Hereafter, the mobile driving device may drive the pallet along the other conveyor track section.

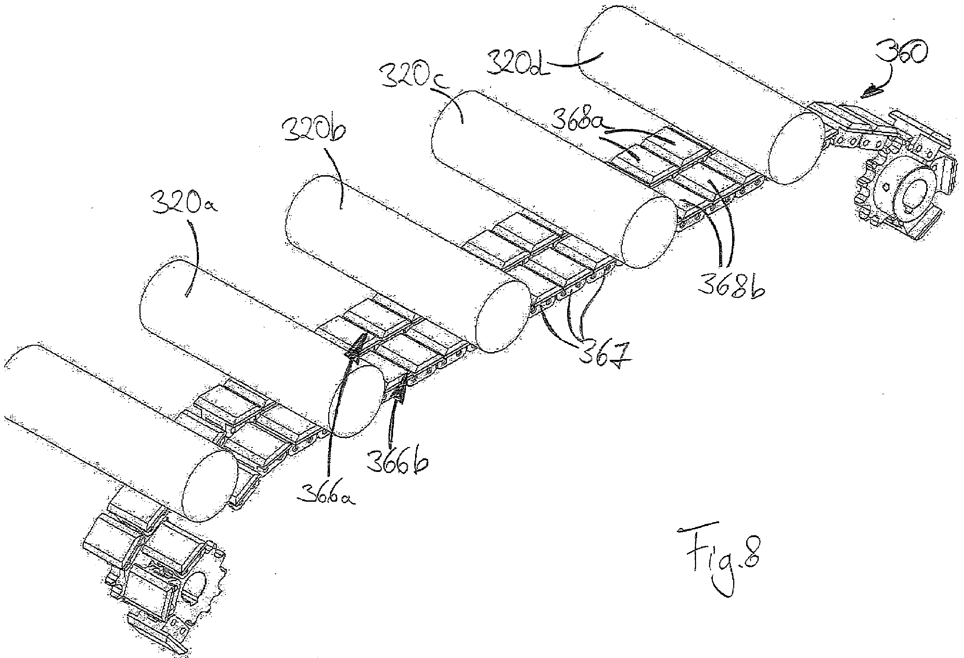

Making reference to Fig. 8 a belt drive 360 is shown in a partial view engaging for rollers 320 a-d of a roller conveyor. The belt drive 360 comprises two separate endless chains 366a,b being arranged parallel to each other and being driven synchronously. Each chain comprises a plurality of chain links 367. Friction pads 368a,b are attached to said chain links on the side of the chain facing towards the rollers 320a-d. The friction pads establish a frictional contact to the rollers to transfer a driving force. Said friction pads 367a, b are releasable from said chain and may be replaced if worn. As can be seen from Figure 8, the friction pads 367a are somewhat staggered to the friction pads 367b such that a friction pad 367b is on the same drive position corresponding to a gap between two adjacent friction pads 367a. By this, a smooth and constant frictional drive transfer to the rollers is established.

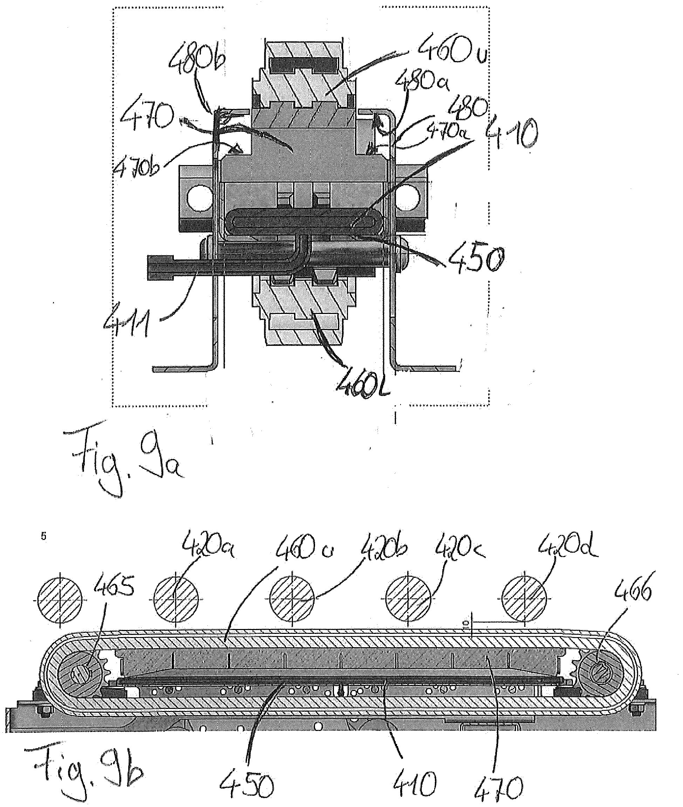

Making reference to figures 9a,b a pneumatically driven lifting device is shown. The lifting device comprise a tubular elastic hose 410 which is in fluid communication via a pressure line 11 with a source of pressurized air. A control valve like a 3/2 electrically actuated pneumatic valve may be interpositioned in said pressure line to control pressurizing of said hose 410. The hose 410 is shown in a non-pressurized condition. In this non-pressurized condition, the lifting device is lowered.

The hose 410 is supported by a stationary support rail 450. Said support rail is arranged between the upper section 460u of a drive belt and the lower section 460l of said drive belt, wherein the drive belt forms and endless drive trum (strand). The drive belt is driven and deflected at both ends by sprocket wheels 465, 466. As can be seen, the hose 410 extends in a longitudinal direction along the whole space between the two sprockets 465, 466.

A slide transfer rail 470 is positioned on top of the hose and is movable in a direction transverse to the longitudinal extension of the hose. The slide transfer rail 470 may be moved up and down to effect the raising and lowering of the lifting device if the hose is expanded by applying pressure via the pressure line to the inner volume of the hose. The slide transfer rail comprises an upper slide surface which is in contact with an upper section 460u of a chain

The slide transfer rail 470 and the hose 410 are positioned inside a guide and stopper frame 480 which extends along the hose 410 and the transfer rail 470. The guide and stopper frame 480 guides the slide transfer rail for a vertical movement and limits the range of vertical movement by stops 480 a,b abutting corresponding stopper faces 470a,b at the slide transfer rail. By this, the slide transfer rail is lifted to a predetermined level if the hose 410 is inflated.

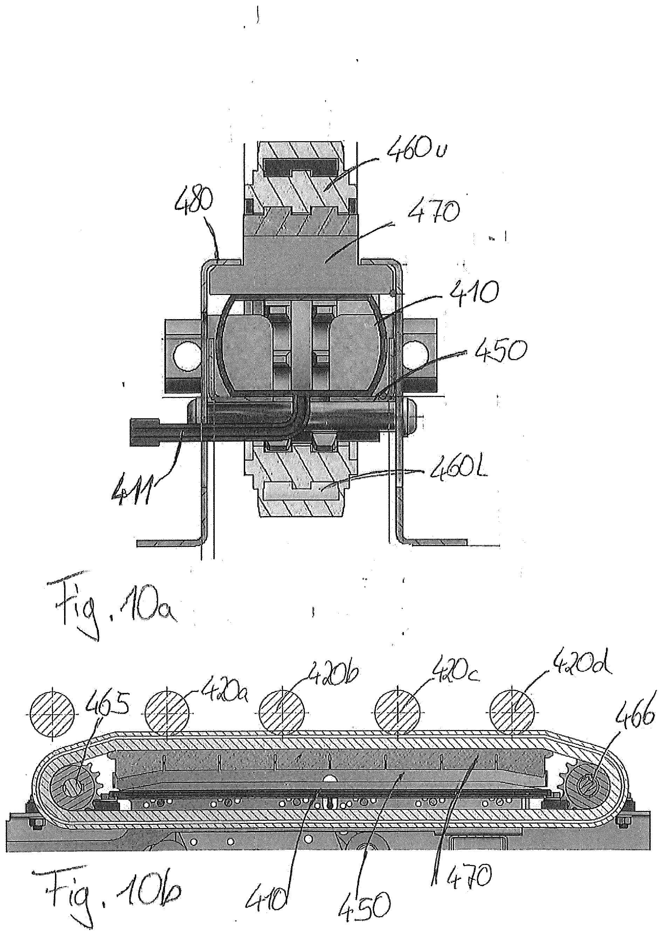

Figs. 10a,b show the arrangement of Figs. 9a,b with the hose being inflated by pressurizing the inner volume of the hose via the pressure line. As can be seen, the slide transfer rail 470 is lifted to abut the stops 480 a,b and the slide transfer rail thus raised the upper section 460u of the drive belt 460. By this, the upper frictional surface pads at the drive belt 460 are in frictional contact with the rollers 420a-d such that a driving movement of the belt 460 produces a rotational movement of said rollers 420a-d.

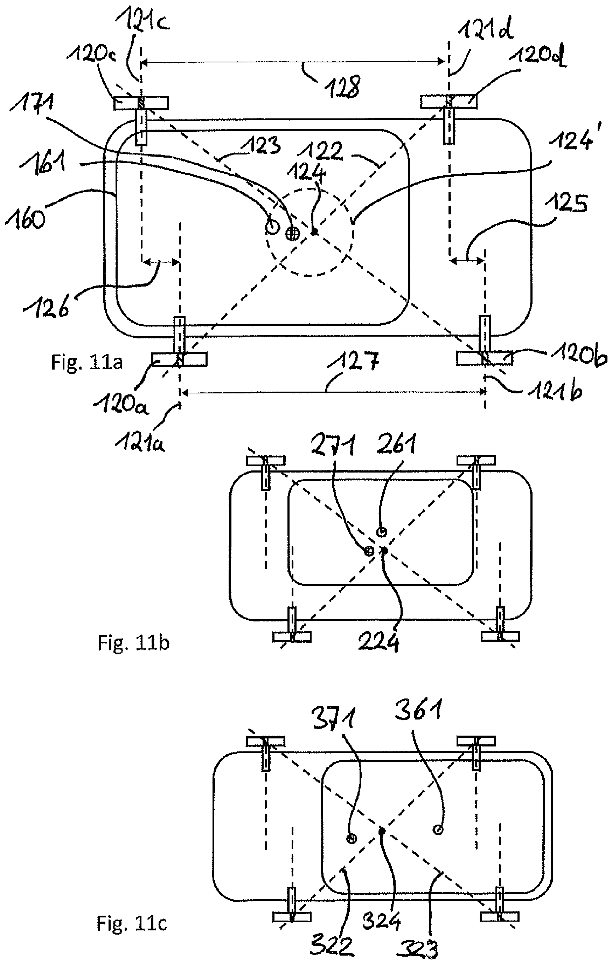

Figure 11a shows a schematic top view of a mobile driving device. The mobile driving device has four wheels 120a-d rotatable about four axes 121a-d, as explained beforehand. Two diagonals 122, 123 each connect the center points of the ground contact surface of two wheels on opposite sides and ends of the mobile driving device. The two diagonals 122, 123 define a point of intersection 124 which is defined to be the center point between the ground contact surfaces of all four wheels.

The mobile driving device has a center of gravity 171 which is close to the center point 124. Further, the mobile driving device comprises a loading area 160 which extends into the rear part of the mobile driving device and which has a center of area 161.

In the embodiment shown in Fig. 11a the center of area and the center of gravity are positioned in an identical quarter defined by the diagonals 122, 123. Thus, in this case a small distance between the center of gravity and the center of area is preferred. Further, the center of area and the center of gravity are positioned within a distance of less than 25% of the wheelbase 127, 128, said distance limit being signalized by circle 124'.

Figure 11b shows another embodiment similar to the one in figure 11a but wherein the center of area 261 of the loading area is positioned in an adjacent quarter to the quarter wherein the center of gravity 271 is positioned. Whilst this is generally a better arrangement than the one in figure 11a with respect to the purpose of the invention still the distance between the center of gravity and the center of area should be small and both centers should be close to the center point 224 to avoid overload of a single wheel.

Figure 11c shows a further embodiment similar to the embodiment in figure 11b but wherein the center of gravity 371 and the center of area 361 are positioned in opposite quarters defined by the diagonals 322, 323, i.e. are positioned on different sides of both of said diagonals. This is an optimum arrangement of the center of gravity and the center of area and in such case even a large distance between the center of gravity and the center of area and a large distance of the two centers from the center point 324 may be compensated to produce a total center of gravity of the mobile driving device and a load carried by the mobile driving device on the loading area will be close to the middle point 324 between the four wheels.

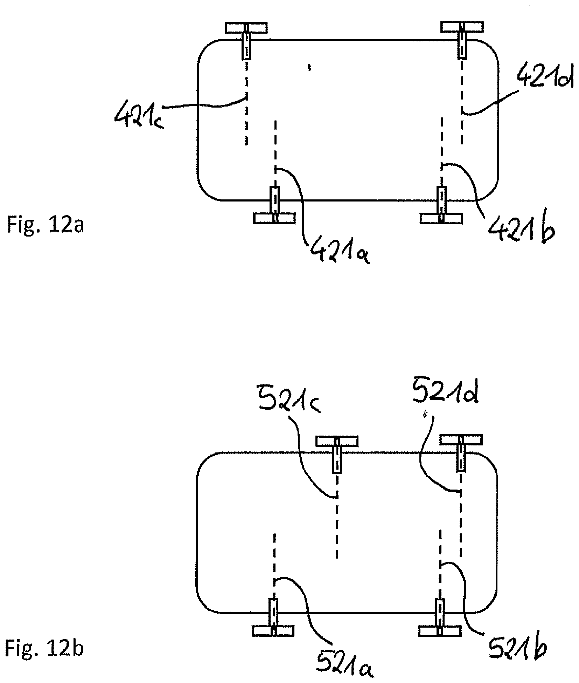

Fig. 12a shows an alternative arrangement of the wheel axes, wherein the wheelbase of the wheels on one side is smaller than the wheelbase of the wheels on the opposite side of the chassis. Such that both wheel axis 421a,b on the one side are arranged inward from the wheels axes 421 c, d on the opposite side.

Fig. 12b shows an arrangement of the wheel axes similar to the one shown in Fig. 11a-c. However, the wheelbase of the wheels 521c,d on one side is smaller than the wheelbase of the wheels 521a, b on the opposite side of the chassis.

## Claims

1. Mobile driving device for driving a roller conveyor (3), comprising:
- a chassis frame (10),
- a traction device mounted to said chassis frame, wherein said traction device is adapted to move said chassis frame on a supporting surface (1),
- a first drive unit (30) mechanically coupled to said traction device to transmit a driving force to said traction device for moving said chassis frame on said supporting surface (1),
- a roller driving device mounted to said chassis frame (10), wherein said roller driving device is adapted to be mechanically coupled to one or a plurality of rollers of said roller conveyor (3), and
- a second drive unit mechanically coupled to said roller driving device for transmitting a conveying force to said roller driving device,
wherein the traction device comprises a first wheel (20b) rotatable about a first axis, a second wheel (20d), rotatable about a second axis, a third wheel (20a) rotatable about a third axis and a fourth wheel (20c) rotatable about a fourth axis,
wherein said first, second, third and fourth axis (21b, 21d, 21a, 21c) are parallel to each other in a straightforward driving condition wherein said mobile driving device moves along a straight line,
wherein said first and said second axis (21b, 21d) are arranged at a front end of said chassis frame (10) and said third and said fourth axis (21a, 21c) are arranged at a rear end of said chassis frame (10),
**characterized in**
**that** in said straightforward driving condition said first axis (21b) is arranged in a first offset distance to said second axis (21d), and said third axis (21a) is arranged in a second offset distance to said fourth axis (21c),
wherein the driving device employed for driving the rollers of a roller conveyor is mobile, such that the driving device can be moved relatively to the roller conveyor and be positioned at different places at the roller conveyor.

2. Mobile driving device according to claim 1,
**characterized in**
**that** said first to fourth wheels (20b, 20d, 20a, 20c) define a ground contact plane, herein said first and said second offset distance are oriented in a direction parallel to said ground contact plane.

3. Mobile driving device according to claim 2,
**characterized in**
**that** said first to fourth axis (21b, 21d, 21a, 21c) lie in a direction parallel to said ground contact plane.

4. Mobile driving device according to any of the preceding claims,
**characterized in**
**that** said first and third wheel (20b, 20a) are arranged at a first side of said chassis frame (10) in a first wheelbase distance to each other and said second and fourth wheel (20d, 20c) are arranged at a second side of said chassis frame (10) opposite to said first side in a second wheelbase distance to each other.

5. Mobile driving device according to any of the preceding claims,
**characterized in that**
- said first and said second offset distance are identical,
- said first and said second wheelbase distance are identical,
- said first and third wheel are guided by said first and second axis to run along a first single trail, and/or
- said second and fourth wheel are guided by said first and second axis to run along a second single trail.

6. Mobile driving device according to any of the preceding claims,
**characterized in**
**that** said chassis frame (10) including said first to fourth wheels (20b, 20d, 20a, 20c) and axes (21b, 21d, 21a, 21c) has a center of gravity and said first to fourth wheel each define a corresponding first to fourth ground contact point,
wherein said center of gravity is positioned in a horizontal distance of less than 25% of the bigger one of said first wheelbase distance and said second wheelbase distance from a point of intersection of a first diagonal line connecting said first and said fourth ground contact point and a second diagonal line connecting said second and said third ground contact point.

7. Mobile driving device according to any of the preceding claims,
**characterized in**
**that** said chassis frame (10) comprises a loading area having a center of area and said first to fourth wheel (20b, 20d, 20a, 20c) each define a corresponding first to fourth ground contact point,
wherein said center of area is positioned in a horizontal distance of less than 25% of the bigger one of said first wheelbase distance and said second wheelbase distance from a point of intersection of a first diagonal line connecting said first and said fourth ground contact point and a second diagonal line connecting said second and said third ground contact point.

8. Mobile driving device according to any of the preceding claims,
**characterized in**
**that** said chassis frame (10) including said first to fourth wheels (20b, 20d, 20a, 20c) and axes (21b, 21d, 21a, 21c) has a center of gravity and said first to fourth wheel each define a corresponding first to fourth ground contact point, and
said chassis frame comprises a loading area having a center of area and said first to fourth wheel each define a corresponding first to fourth ground contact point,
wherein said traction device defines a traction device center point being the point of intersection of a first diagonal line connecting said first and said fourth ground contact point and a second diagonal line connecting said second and said third ground contact point, and
wherein said chassis frame has a chassis weight and said loading area has a maximum weight load capacity,
said center of area is positioned in a relative distance from said center of gravity, said relative distance being less than A% of said bigger one of said first wheelbase distance and said second wheelbase distance, wherein said center of area and said center of gravity are positioned in a distance of less than 25% of said bigger one of said first wheelbase distance and said second wheelbase distance and wherein
A = 25 x (CW / MWLC), preferably A = 10 x (CW / MWLC), if said center of area and said center of gravity are not arranged on opposite sides in relation to the first diagonal line or are not on opposite sides in relation to the second diagonal line, and
wherein A = 50 x (CW / MWLC), preferably A = 25 x (CW / MWLC), if said center of area and said center of gravity are arranged on opposite sides in relation to the first diagonal line and are arranged on opposite sides in relation to the second diagonal line,
wherein
- CW is the chassis weight in kg, and
- MWLC is the maximum weight load capacity in kg.

9. Mobile driving device according to any of the preceding claims,
**characterized in**
**that** said roller driving device comprises an upward facing contact surface for transmitting the driving force from said second drive unit.

10. Mobile driving device according to any of the preceding claims,
**characterized in**
**that** said first drive unit comprises a drive motor and a coupling arranged between said drive motor and said traction device and wherein said second drive unit comprises said drive motor and a second coupling arranged between said drive motor and said roller driving device.

11. Mobile driving device according to any of the preceding claims,
**characterized in**
**that** said traction device is adapted to selectively move said chassis frame (10) along a straight line or along a curved line on said supporting surface.

12. Mobile driving device according to any of the preceding claims,
**characterized by**
a lifting device for lifting said roller driving device relative to said chassis frame (10), wherein said lifting device is preferably pneumatically-driven.

13. Mobile driving device according to any of the preceding claims,
**characterized in that** said roller driving device comprises a conveyor belt and a driving device for moving said conveyor belt,
wherein preferably said conveyor belt comprises a frictional surface facing upwards for engaging a frictional countersurface of one or a plurality of rollers of said roller conveyor device.

14. Mobile driving device according to any of the preceding claims,
**characterized in**
**that** said roller driving device comprises a form locking element for a form locking engagement in the interspace between two rollers of said roller conveyor and a friction element for a friction engagement of at least one roller of said roller conveyor, wherein preferably said form locking element and said friction element are integrally formed by a transfer element for transferring forces by frictional and form-locking engagement.

15. A method of conveying goods on a roller conveyor (3), comprising the steps of:
- driving a chassis frame (10) to the roller conveyor by a traction device arranged at said chassis frame,
- coupling a roller driving device arranged at said chassis frame to the roller conveyor,
- driving rollers of said roller conveyor by a frictional engagement,
wherein said frictional engagement is established between a friction wheel or a conveyor belt of said roller driving device and
wherein the traction device comprises a first wheel (20b) rotating about a first axis (21b), a second wheel (20d) rotating about a second axis (21d), a third wheel (20a) rotating about a third axis (21a) and a fourth wheel (20c) rotating about a fourth axis (21c),
wherein said first, second, third and fourth axis (21b, 21d, 21a, 21c) are parallel to each other in a straightforward driving condition wherein said mobile driving device moves along a straight line,
wherein said first and said second axis (21b, 21d) are arranged at a front end of said chassis frame and said third and said fourth axis (21a, 21c) are arranged at a rear end of said chassis frame,
said first axis is arranged in a first offset distance to said second axis, and said third axis is arranged in a second offset distance to said fourth axis such that each of the first, second, third and fourth wheel come into contact with a straight obstacle on a ground surface extending perpendicular to the direction of movement of the mobile driving device on said ground surface at different times,
wherein the driving device employed for driving the rollers of a roller conveyor is mobile, such that the driving device is moved relatively to the roller conveyor and be positioned at different places at the roller conveyor.

## Patentansprüche

1. Mobile Antriebsvorrichtung zum Antreiben eines Rollenförderers (3), Folgendes umfassend:
- einen Chassisrahmen (10),
- eine am Chassisrahmen montierte Traktionsvorrichtung, wobei die Traktionsvorrichtung dazu eingerichtet ist, den Chassisrahmen auf einer Trägerfläche (1) zu bewegen,
- eine erste Antriebseinheit (30), die mit der Traktionsvorrichtung mechanisch gekoppelt ist, um eine Antriebskraft auf die Traktionsvorrichtung zu übertragen, um den Chassisrahmen auf der Trägerfläche (1) zu bewegen,
- eine am Chassisrahmen (10) montierte Rollenantriebsvorrichtung, wobei die Rollenantriebsvorrichtung dazu eingerichtet ist, mit einer oder mehreren Rollen des Rollenförderers (3) mechanisch gekoppelt zu sein, und
- eine zweite Antriebseinheit, die mit der Rollenantriebsvorrichtung mechanisch gekoppelt ist, um eine Förderkraft auf die Rollenantriebsvorrichtung aufzubringen,
wobei die Traktionsvorrichtung ein um eine erste Achse drehbares erstes Rad (20b), ein um eine zweite Achse drehbares zweites Rad (20d), ein um eine dritte Achse drehbares drittes Rad (20a) und ein um eine vierte Achse drehbares viertes Rad (20c) umfasst,
wobei die erste, zweite, dritte und vierte Achse (21b, 21d, 21a, 21c) in einem geraden Antriebszustand, in dem sich die mobile Antriebsvorrichtung entlang einer geraden Linie bewegt, zueinander parallel sind,
wobei die erste und zweite Achse (21b, 21d) an einem vorderen Ende des Chassisrahmens (10) angeordnet sind und die dritte und vierte Achse (21a, 21c) an einem hinteren Ende des Chassisrahmens (10) angeordnet sind, **dadurch gekennzeichnet,**
**dass** die erste Achse (21b) im geraden Antriebszustand in einer ersten Versatzentfernung zur zweiten Achse (21d) angeordnet ist und die dritte Achse (21a) in einer zweiten Versatzentfernung zur vierten Achse (21c) angeordnet ist, wobei die zum Antreiben der Rollen eines Rollenförderers eingesetzte Antriebsvorrichtung mobil ist, sodass die Antriebsvorrichtung in Bezug zum Rollenförderer bewegt und an verschiedenen Stellen am Rollenförderer positioniert werden kann.

2. Mobile Antriebsvorrichtung nach Anspruch 1,
**dadurch gekennzeichnet,**
**dass** das erste bis vierte Rad (20b, 20d, 20a, 20c) eine Bodenkontaktebene definieren, wobei die erste und zweite Versatzentfernung in eine Richtung parallel zur Bodenkontaktebene ausgerichtet sind.

3. Mobile Antriebsvorrichtung nach Anspruch 2,
**dadurch gekennzeichnet,**
**dass** die erste bis vierte Achse (21b, 21d, 21a, 21c) in einer Richtung parallel zur Bodenkontaktebene liegen.

4. Mobile Antriebsvorrichtung nach einem der vorstehenden Ansprüche,
**dadurch gekennzeichnet,**
**dass** das erste und dritte Rad (20b, 20a) an einer ersten Seite des Chassisrahmens (10) in einer ersten Radstandentfernung zueinander angeordnet sind und das zweite und vierte Rad (20d, 20c) an einer der ersten Seite entgegengesetzten zweiten Seite des Chassisrahmens (10) in einer zweiten Radstandentfernung zueinander angeordnet sind.

5. Mobile Antriebsvorrichtung nach einem der vorstehenden Ansprüche,
**dadurch gekennzeichnet, dass**
- die erste und zweite Versatzentfernung identisch sind,
- die erste und zweite Radstandentfernung identisch sind,
- das erste und dritte Rad von der ersten und zweiten Achse geführt werden, entlang einer ersten einzelnen Strecke zu verlaufen, und/oder
- das zweite und vierte Rad von der ersten und zweiten Achse geführt werden, entlang einer zweiten einzelnen Strecke zu verlaufen.

6. Mobile Antriebsvorrichtung nach einem der vorstehenden Ansprüche,
**dadurch gekennzeichnet,**
**dass** der Chassisrahmen (10), einschließlich des ersten bis vierten Rads (20b, 20d, 20a, 20c) und der ersten bis vierten Achse (21b, 21d, 21a, 21c), einen Schwerpunkt aufweist und das erste bis vierte Rad jeweils einen zugehörigen ersten bis vierten Bodenkontaktpunkt definiert,
wobei der Schwerpunkt in einer horizontalen Entfernung von weniger als 25 % der größeren der ersten Radstandentfernung und der zweiten Radstandentfernung von einem Schnittpunkt einer ersten diagonalen Linie, die den ersten und vierten Bodenkontaktpunkt verbindet, und einer zweiten diagonalen Linie, die den zweiten und den dritten Bodenkontaktpunkt verbindet, positioniert ist.

7. Mobile Antriebsvorrichtung nach einem der vorstehenden Ansprüche,
**dadurch gekennzeichnet,**
**dass** der Chassisrahmen (10) einen Ladebereich umfasst, der eine Bereichsmitte aufweist, und das erste bis vierte Rad (20b, 20d, 20a, 20c) jeweils einen zugehörigen ersten bis vierten Bodenkontaktpunkt definiert,
wobei die Bereichsmitte in einer horizontalen Entfernung von weniger als 25 % der größeren der ersten Radstandentfernung und der zweiten Radstandentfernung von einem Schnittpunkt einer ersten diagonalen Linie, die den ersten und vierten Bodenkontaktpunkt verbindet, und einer zweiten diagonalen Linie, die den zweiten und dritten Bodenkontaktpunkt verbindet, positioniert ist.

8. Mobile Antriebsvorrichtung nach einem der vorstehenden Ansprüche,
**dadurch gekennzeichnet,**
**dass** der Chassisrahmen (10), einschließlich des ersten bis vierten Rads (20b, 20d, 20a, 20c) und der ersten bis vierten Achse (21b, 21d, 21a, 21c), einen Schwerpunkt aufweist und das erste bis vierte Rad jeweils einen zugehörigen ersten bis vierten Bodenkontaktpunkt definiert und
der Chassisrahmen einen Ladebereich umfasst, der eine Bereichsmitte aufweist, und das erste bis vierte Rad jeweils einen zugehörigen ersten bis vierten Bodenkontaktpunkt definiert,
wobei die Traktionsvorrichtung einen Traktionsvorrichtungsmittelpunkt definiert, der der Schnittpunkt einer ersten diagonalen Linie, die den ersten und vierten Bodenkontaktpunkt verbindet, und einer zweiten diagonalen Linie, die den zweiten und dritten Bodenkontaktpunkt verbindet, ist, und wobei der Chassisrahmen ein Chassisgewicht aufweist und der Ladebereich eine maximale Tragfähigkeit aufweist,
wobei die Bereichsmitte in einer relativen Entfernung vom Schwerpunkt positioniert ist, wobei die relative Entfernung kleiner als A % der größeren der ersten Radstandentfernung und der zweiten Radstandentfernung ist, wobei die Bereichsmitte und der Schwerpunkt in einer Entfernung von weniger als 25 % der größeren der ersten Radstandentfernung und der zweiten Radstandentfernung positioniert sind und wobei
A = 25 × (CW / MWLC), vorzugsweise A = 10 × (CW / MWLC), wenn die Bereichsmitte und der Schwerpunkt in Bezug zur ersten diagonalen Linie nicht auf entgegengesetzten Seiten angeordnet sind oder in Bezug zur zweiten diagonalen Linie nicht auf entgegengesetzten Seiten angeordnet sind, und
wobei A = 50 × (CW / MWLC), vorzugsweise A = 25 × (CW / MWLC), wenn die Bereichsmitte und der Schwerpunkt in Bezug zur ersten diagonalen Linie auf entgegengesetzten Seiten angeordnet sind und in Bezug zur zweiten diagonalen Linie auf entgegengesetzten Seiten angeordnet sind,
wobei
- CW das Chassisgewicht in kg ist und
- MWLC die maximale Tragfähigkeit in kg ist.

9. Mobile Antriebsvorrichtung nach einem der vorstehenden Ansprüche,
**dadurch gekennzeichnet,**
**dass** die Rollenantriebsvorrichtung eine aufwärts gewandte Kontaktfläche zum Übertagen der Antriebskraft von der zweiten Antriebseinheit umfasst.

10. Mobile Antriebsvorrichtung nach einem der vorstehenden Ansprüche,
**dadurch gekennzeichnet,**
**dass** die erste Antriebseinheit einen Antriebsmotor und eine zwischen dem Antriebsmotor und der Traktionsvorrichtung angeordnete Kupplung umfasst und wobei die zweite Antriebseinheit den Antriebsmotor und eine zwischen dem Antriebsmotor und der Rollenantriebsvorrichtung angeordnete zweite Kupplung umfasst.

11. Mobile Antriebsvorrichtung nach einem der vorstehenden Ansprüche,
**dadurch gekennzeichnet,**
**dass** die Traktionsvorrichtung dazu eingerichtet ist, den Chassisrahmen (10) selektiv entlang einer geraden Linie oder entlang einer gekrümmten Linie auf der Trägerfläche zu bewegen.

12. Mobile Antriebsvorrichtung nach einem der vorstehenden Ansprüche,
**gekennzeichnet durch**
eine Hebevorrichtung zum Anheben der Rollenantriebsvorrichtung in Bezug zum Chassisrahmen (10), wobei die Hebevorrichtung vorzugsweise pneumatisch angetrieben ist.

13. Mobile Antriebsvorrichtung nach einem der vorstehenden Ansprüche,
**dadurch gekennzeichnet,**
**dass** die Rollenantriebsvorrichtung ein Förderband und eine Antriebsvorrichtung zum Bewegen des Förderbands umfasst,
wobei das Förderband vorzugsweise eine aufwärts gewandte Reibfläche zum Eingreifen in eine Reibgegenfläche einer oder mehrerer Rollen der Rollenförderervorrichtung umfasst.

14. Mobile Antriebsvorrichtung nach einem der vorstehenden Ansprüche,
**dadurch gekennzeichnet,**
**dass** die Rollenantriebsvorrichtung ein Formschlusselement für einen Formschlusseingriff im Zwischenraum zwischen zwei Rollen des Rollenförderers und ein Reibungselement für einen Reibungseingriff mindestens einer Rolle des Rollenförderers umfasst, wobei das Formschlusselement und das Reibungselement vorzugsweise mittels eines Übertragungselements zum Übertragen von Kräften durch Reibungs- und Formschlusseingriff einstückig ausgebildet sind.

15. Verfahren zum Fördern von Waren auf einem Rollenförderer (3), die folgenden Schritte umfassend:
- Fahren eines Chassisrahmens (10) zum Rollenförderer mittels einer am Chassisrahmen angeordneten Traktionsvorrichtung,
- Koppeln einer am Chassisrahmen angeordneten Rollenantriebsvorrichtung mit dem Rollenförderer,
- Antreiben von Rollen des Rollenförderers mittels Reibungseingriff,
wobei der Reibungseingriff zwischen einem Reibrad oder einem Förderband der Rollenantriebsvorrichtung aufgebaut wird und
wobei die Traktionsvorrichtung ein sich um eine erste Achse (21b) drehendes erstes Rad (20b), ein sich um eine zweite Achse (21d) drehendes zweites Rad (20d) ein sich um eine dritte Achse (21a) drehendes drittes Rad (20a) und ein sich um eine vierte Achse (21c) drehendes viertes Rad (20c) umfasst,
wobei die erste, zweite, dritte und vierte Achse (21b, 21d, 21a, 21c) in einem geraden Antriebszustand, in dem sich die mobile Antriebsvorrichtung entlang einer geraden Linie bewegt, zueinander parallel sind,
wobei die erste und zweite Achse (21b, 21d) an einem vorderen Ende des Chassisrahmens angeordnet sind und die dritte und vierte Achse (21a, 21c) an einem hinteren Ende des Chassisrahmens angeordnet sind,
wobei die erste Achse in einer ersten Versatzentfernung zur zweiten Achse angeordnet ist und die dritte Achse in einer zweiten Versatzentfernung zur vierten Achse angeordnet ist, sodass das erste, zweite, dritte und vierte Rad jeweils zu verschiedenen Zeitpunkten ein gerades Hindernis auf einer Bodenfläche berühren, das sich senkrecht zur Bewegungsrichtung der mobilen Antriebsvorrichtung auf der Bodenfläche erstreckt,
wobei die zum Antrieben der Rollen eines Rollenförderers eingesetzte Antriebsvorrichtung mobil ist, sodass die Antriebsvorrichtung in Bezug zum Rollenförderer bewegt und an verschiedenen Stellen am Rollenförderer positioniert werden kann.

## Revendications

1. Dispositif d'entraînement mobile destiné à entraîner un transporteur à rouleaux (3), comprenant :
- un châssis (10),
- un dispositif de traction installé sur ledit châssis, ledit dispositif de traction étant propre à déplacer ledit châssis sur une surface de support (1),
- une première unité d'entraînement (30) accouplée mécaniquement audit dispositif de traction pour transmettre une force d'entraînement audit dispositif de traction afin de déplacer ledit châssis sur ladite surface de support (1),
- un dispositif d'entraînement de rouleaux installé sur ledit châssis (10), ledit dispositif d'entraînement de rouleaux étant propre à être accouplé mécaniquement à un ou plusieurs rouleaux dudit transporteur à rouleaux (3), et
- une seconde unité d'entraînement accouplée mécaniquement audit dispositif d'entraînement de rouleaux afin de transmettre une force de transport audit dispositif d'entraînement de rouleaux,
le dispositif de traction comprenant une première roue (20b) rotative autour d'un premier axe, une deuxième roue (20d) rotative autour d'un deuxième axe, une troisième roue (20a) rotative autour d'un troisième axe et une quatrième roue (20c) rotative autour d'un quatrième axe,
lesdits premier, deuxième, troisième et quatrième axes (21b, 21d, 21a, 21c) étant parallèles les uns aux autres dans un état d'entraînement simple dans lequel ledit dispositif d'entraînement mobile se déplace le long d'une ligne droite,
lesdits premier et deuxième axes (21b, 21d) étant situés à une extrémité avant dudit châssis (10) et lesdits troisième et quatrième axes (21a, 21c) étant situés à une extrémité arrière dudit châssis (10),
**caractérisé en ce que**
dans ledit état d'entraînement simple, ledit premier axe (21b) est situé à une première distance de décalage relativement audit deuxième axe (21d), et ledit troisième axe (21a) est situé à une seconde distance de décalage relativement audit quatrième axe (21c),
le dispositif d'entraînement employé pour entraîner les rouleaux d'un transporteur à rouleaux étant mobile, de telle sorte que le dispositif d'entraînement peut être déplacé par rapport au transporteur à rouleaux et être placé à différents endroits au niveau du transporteur à rouleaux.

2. Dispositif d'entraînement mobile selon la revendication 1,
**caractérisé en ce que**
lesdites première à quatrième roues (20b, 20d, 20a, 20c) définissent un plan de contact avec le sol, lesdites première et seconde distances de décalage étant orientées dans une direction parallèle audit plan de contact avec le sol.

3. Dispositif d'entraînement mobile selon la revendication 2,
**caractérisé en ce que**
lesdits premier à quatrième axes (21b, 21d, 21a, 21c) sont positionnés dans une direction parallèle audit plan de contact avec le sol.

4. Dispositif d'entraînement mobile selon l'une quelconque des revendications précédentes,
**caractérisé en ce que**
lesdites première et troisième roues (20b, 20a) sont situées d'un premier côté dudit châssis (10) avec un premier empattement entre elles, et lesdites deuxième et quatrième roues (20d, 20c) sont situées d'un second côté dudit châssis (10) à l'opposé dudit premier côté avec un second empattement entre elles.

5. Dispositif d'entraînement mobile selon l'une quelconque des revendications précédentes,
**caractérisé en ce que**
- lesdites première et seconde distances de décalage sont identiques,
- lesdits premier et second empattements sont identiques,
- lesdites première et troisième roues sont guidées par lesdits premier et deuxième axes de sorte qu'elles roulent le long d'un premier chemin unique, et/ou
- lesdites deuxième et quatrième roues sont guidées par lesdits premier et deuxième axes de sorte qu'elles roulent le long d'un second chemin unique.

6. Dispositif d'entraînement mobile selon l'une quelconque des revendications précédentes,
**caractérisé en ce que**
ledit châssis (10) comprenant lesdites première à quatrième roues (20b, 20d, 20a, 20c) et lesdits premier à quatrième axes (21b, 21d, 21a, 21c) présente un centre de gravité et lesdites première à quatrième roues définissent chacune des premier à quatrième points de contact avec le sol correspondants,
ledit centre de gravité étant placé à une distance horizontale inférieure à 25 % de l'empattement le plus grand parmi ledit premier empattement et ledit second empattement d'un point d'intersection d'une première ligne diagonale reliant lesdits premier et quatrième points de contact avec le sol et d'une seconde ligne diagonale reliant lesdits deuxième et troisième points de contact avec le sol.

7. Dispositif d'entraînement mobile selon l'une quelconque des revendications précédentes,
**caractérisé en ce que**
ledit châssis (10) comprend une région de chargement présentant un centre de région et lesdites première à quatrième roues (20b, 20d, 20a, 20c) définissent chacune des premier à quatrième points de contact avec le sol correspondants,
ledit centre de région étant placé à une distance horizontale inférieure à 25 % de l'empattement le plus grand parmi ledit premier empattement et ledit second empattement d'un point d'intersection d'une première ligne diagonale reliant lesdits premier et quatrième points de contact avec le sol et d'une seconde ligne diagonale reliant lesdits deuxième et troisième points de contact avec le sol.

8. Dispositif d'entraînement mobile selon l'une quelconque des revendications précédentes,
**caractérisé en ce que**
ledit châssis (10) comprenant lesdites première à quatrième roues (20b, 20d, 20a, 20c) et lesdits premier à quatrième axes (21b, 21d, 21a, 21c) présente un centre de gravité et lesdites première à quatrième roues définissent chacune des premier à quatrième points de contact avec le sol correspondants, et
ledit châssis comprend une région de chargement présentant un centre de région et lesdites première à quatrième roues définissent chacune des premier à quatrième points de contact avec le sol correspondants,
ledit dispositif de traction définissant un point central de dispositif de traction qui est le point d'intersection d'une première ligne diagonale reliant lesdits premier et quatrième points de contact avec le sol et d'une seconde ligne diagonale reliant lesdits deuxième et troisième points de contact avec le sol, et
ledit châssis présentant un poids de châssis et ladite région de chargement présentant une capacité de charge pondérale maximale,
ledit centre de région étant placé à une distance relative dudit centre de gravité, ladite distance relative étant inférieure à A % dudit empattement le plus grand parmi ledit premier empattement et ledit second empattement, ledit centre de région et ledit centre de gravité étant placés à une distance inférieure à 25 % dudit empattement le plus grand parmi ledit premier empattement et ledit second empattement et
A = 25 × (CW/MWLC), de préférence A = 10 × (CW/MWLC), si ledit centre de région et ledit centre de gravité ne sont pas situés sur des côtés opposés relativement à la première ligne diagonale ou ne sont pas situés sur des côtés opposés relativement à la seconde ligne diagonale, et
A = 50 × (CW/MWLC), de préférence A = 25 × (CW/MWLC), si ledit centre de région et ledit centre de gravité sont situés sur des côtés opposés relativement à la première ligne diagonale et sont situés sur des côtés opposés relativement à la seconde ligne diagonale,
- CW étant le poids du châssis en kg, et
- MWLC étant la capacité de charge pondérale maximale en kg.

9. Dispositif d'entraînement mobile selon l'une quelconque des revendications précédentes,
**caractérisé en ce que**
ledit dispositif d'entraînement de rouleaux comprend une surface de contact orientée vers le haut destinée à transmettre la force d'entraînement provenant de ladite seconde unité d'entraînement.

10. Dispositif d'entraînement mobile selon l'une quelconque des revendications précédentes,
**caractérisé en ce que**
ladite première unité d'entraînement comprend un moteur d'entraînement et un mécanisme d'accouplement disposé entre ledit moteur d'entraînement et ledit dispositif de traction et ladite seconde unité d'entraînement comprenant ledit moteur d'entraînement et un second mécanisme d'accouplement disposé entre ledit moteur d'entraînement et ledit dispositif d'entraînement de rouleaux.

11. Dispositif d'entraînement mobile selon l'une quelconque des revendications précédentes,
**caractérisé en ce que**
ledit dispositif de traction est propre à déplacer de manière sélective ledit châssis (10) le long d'une ligne droite ou le long d'une ligne courbe sur ladite surface de support.

12. Dispositif d'entraînement mobile selon l'une quelconque des revendications précédentes,
**caractérisé par**
un dispositif de levage destiné à élever ledit dispositif d'entraînement de rouleaux relativement audit châssis (10), ledit dispositif de levage étant, de préférence, à entraînement pneumatique.

13. Dispositif d'entraînement mobile selon l'une quelconque des revendications précédentes,
**caractérisé en ce que**
ledit dispositif d'entraînement de rouleaux comprend une courroie transporteuse et un dispositif d'entraînement destiné à déplacer ladite courroie transporteuse,
ladite courroie transporteuse comprenant, de préférence, une surface de frottement orientée vers le haut destinée à interagir avec une surface de frottement correspondante sur un ou plusieurs rouleaux dudit dispositif de transporteur à rouleaux.

14. Dispositif d'entraînement mobile selon l'une quelconque des revendications précédentes,
**caractérisé en ce que**
ledit dispositif d'entraînement de rouleaux comprend un élément d'engrènement destiné à être engrené dans l'intervalle entre deux rouleaux dudit transporteur à rouleaux et un élément de frottement destiné à interagir par frottement avec au moins un rouleau dudit transporteur à rouleaux, ledit élément d'engrènement et ledit élément de frottement étant formés d'un seul tenant par un élément de transfert destiné à transférer des forces par frottement et par engrènement.

15. Procédé de transport de produits sur un transporteur à rouleaux (3), comprenant les étapes suivantes :
- entraîner un châssis (10) jusqu'au transporteur à rouleaux au moyen d'un dispositif de traction disposé au niveau dudit châssis,
- accoupler un dispositif d'entraînement de rouleaux disposé au niveau dudit châssis avec ledit transporteur à rouleaux,
- entraîner des rouleaux dudit transporteur à rouleaux par le biais d'une interaction par frottement,
ladite interaction par frottement étant établie entre une roue de frottement ou une courroie transporteuse dudit dispositif d'entraînement de rouleaux et
le dispositif de traction comprenant une première roue (20b) tournant autour d'un premier axe (21b), une deuxième roue (20d) tournant autour d'un deuxième axe (21d), une troisième roue (20a) tournant autour d'un troisième axe (21a) et une quatrième roue (20c) tournant autour d'un quatrième axe (21c),
lesdits premier, deuxième, troisième et quatrième axes (21b, 21d, 21a, 21c) étant parallèles les uns aux autres dans un état d'entraînement simple dans lequel ledit dispositif d'entraînement mobile se déplace le long d'une ligne droite,
lesdits premier et second axes (21b, 21d) étant situés à une extrémité avant dudit châssis et lesdits troisième et quatrième axes (21a, 21c) étant situés à une extrémité arrière dudit châssis,
ledit premier axe étant situé à une première distance de décalage relativement audit deuxième axe, et ledit troisième axe étant situé à une seconde distance de décalage relativement audit quatrième axe de telle sorte que chacune des première, deuxième, troisième et quatrième roues vienne en contact avec un obstacle droit sur une surface de sol s'étendant perpendiculairement à la direction de déplacement du dispositif d'entraînement mobile sur ladite surface de sol à différents moments,
le dispositif d'entraînement employé pour entraîner les rouleaux d'un transporteur à rouleaux étant mobile, de telle sorte que le dispositif d'entraînement est déplacé par rapport au transporteur à rouleaux et est placé à différents endroits au niveau du transporteur à rouleaux.
